# EUROPÄISCHE PATENTSCHRIFT

(11) **EP 2 887 839 B1**
(45) Veröffentlichungstag und Bekanntmachung des Hinweises auf die Patenterteilung: **11.07.2018**
(21) Anmeldenummer: 13745125.8
(22) Anmeldetag: 06.08.2013
(51) Int. Cl.: A47F 3/04

(54) **KÜHLGERÄT**
COOLING DEVICE
APPAREIL DE RÉFRIGÉRATION

(30) Priorität: 22.08.2012 DE 102012107713
(43) Veröffentlichungstag der Anmeldung: 01.07.2015
(73) Patentinhaber: AHT Cooling Systems GmbH, 8786 Rottenmann (AT)
(72) Erfinder: RESCH, Reinhold, 8755 St. Peter (AT)
(74) Vertreter: Fleck, Hermann-Josef
(86) Internationale Anmeldenummer: PCT/EP2013/066456
(87) Internationale Veröffentlichungsnummer: WO 2014/029613

(56) Entgegenhaltungen:
- WO-A1-2011/074993
- WO-A1-2011/074994
- DE-U1- 29 717 444
- DE-U1-202006 007 152
- US-A1- 2011 302 945

## Beschreibung

Die Erfindung bezieht sich auf ein Kühlregal mit auf beiden Seiten angeordneten tragenden C-förmigen Seitenrahmen aus Rahmenprofilen mit einem rückseitigen Vertikalprofil und einem unteren und oberen nach vorne vorkragenden Horizontalprofil, wobei an den Vertikalprofilen eine Rückwandgruppe mit wärmeisolierender Außenverkleidung, an den unteren Horizontalprofilen eine Bodengruppe und an den oberen Horizontalprofilen eine Dachgruppe angebracht sind, die einen Kühlraum hinten, unten und oben umgeben.

Ein Kühlregal dieser Art ist in der DE 10 2006 020 717 B3 angegeben. Bei diesem bekannten Kühlgerät sind eine Bodeneinheit, Rückwandeinheit und Deckeneinheit an einem Ständermodul angebracht, das zwei vertikale Ständerprofile sowie daran angeschweißte obere und untere Traversen aufweist. Die untere Traverse wird in die Bodeneinheit geschoben und kann dort bei der Montage angeschraubt werden. Unter einer Bodenwanne der Bodeneinheit ist ein Fußgestell befestigt. Wie in dieser Druckschrift gezeigt, sind die isolierte Bodenwanne, ein isoliertes Rückwandteil sowie eine isolierte Formdecke, die Luftführungsteile aufweisen, auf der jeweiligen Außenseite der Ständereinheit angebracht und auf der Regalinnenseite sind in Öffnungen der Ständerprofile Auflagenteile für Regalböden eingehängt. Ein derartiges Kühlregal ist auch in der DE 20 2006 007 152 U1 offenbart. Bei Kühlregalen dieser Art besteht ein Problem darin, eine gute Wärmeisolierung bei einfachem, stabilem Aufbau zu erreichen.

Ein weiteres Kühlregal ist in der WO 2012/025240 A2 gezeigt. Dieses bekannte Kühlregal besitzt einen in seitlicher Ansicht C-förmigen Aufbau aus einer Bodengruppe, Rückwandgruppe und Dachgruppe, in die Komponenten einer Kühleinrichtung integriert sind. Die Bodengruppe, Rückwandgruppe und Dachgruppe sind aus mehreren Schichten aufgebaut, die Zwischenräume für eine Luftführung begrenzen. Die Ausgestaltung eines solchen Kühlregals ist relativ komplex, so dass der Aufbau relativ aufwändig ist.

Ein Kühlgerät mit einem in seitlicher Ansicht C-förmigen Aufbau und eine Anordnung aus solchen Kühlregalen zeigt auch die EP 2 190 321 B1.

In der WO 2011/074994 A1 ist eine nach vorne hin offene Kühlvitrine mit einem Gehäuse aus fünf Wänden und einem an der Außenseite des Gehäuses verlaufenden Warmluftkanal 12 angegeben. Die WO 2011/074993 A1 zeigt eine Rücken-an-Rücken-Anordnung zweier derartiger Kühlvitrinen.

Ein weiteres Kühlregal ist in der DE 297 17 444 111 offenbart.

Der vorliegenden Erfindung liegt die Aufgabe zugrunde, ein Kühlregal der eingangs genannten Art bereit zu stellen, das eine stabile Montage mit einfachen Installationsmaßnahmen und effizienter Kühlung ergibt. Auch ein Verfahren zu einer einfachen Montage soll angegeben werden.

Diese Aufgabe wird mit den Merkmalen des Anspruches 1 bzw. der Ansprüche 13 und 14 gelöst.

Bei dem Kühlgerät ist vorgesehen, dass die beiden Seitenrahmen mittels ihrer unteren Horizontalprofile die Bodengruppe tragen und dass zumindest die wärmeisolierende Außenverkleidung auf der dem Kühlraum zugewandten Innenseite der Vertikalprofile (mittelbar über ein Zwischenelement oder unmittelbar) angeordnet ist.

Diese Maßnahmen ergeben eine vorteilhafte Montage mit stabilem Aufbau bei guter Funktion und Isoliereigenschaft.

Zur seitlichen Begrenzung können einfach Seitenteile angebracht oder weitere Kühlregale angereiht werden, wobei lediglich die Endseiten mit Seitenteilen versehen sind. Über die Vorderseite ist der gegebenenfalls durch Aneinanderreihung mehrerer Kühlregale erweiterte Kühlraum zugänglich, wobei die Vorderseite, je nach Einsatzfall, offen gelassen werden kann oder mittels Türelementen abgeschlossen sein kann.

Bei dem Verfahren ist vorgesehen, dass zwei C-förmige Seitenrahmen mit jeweils einem Vertikalprofil und einem davon nach vorne vorkragenden unteren und oberen Horizontalprofil bereitgestellt werden, dass auf den unteren Horizontalprofilen eine aus wärmeisolierendem Material hergestellte Leitplatte einer Bodengruppe, auf der Vorderseite der Vertikalprofile eine wärmeisolierende Außenverkleidung einer Rückwandgruppe und auf der Unterseite der oberen Horizontalprofile eine wärmeisolierende obere Abdeckung einer Dachgruppe unmittelbar oder über ein Zwischenelement mittelbar montiert werden, dass auf der Oberseite der Leitplatte, der Vorderseite der Außenverkleidung und der Unterseite der oberen Abdeckung mit Abstand plattenförmige Wandelemente für eine Luftführung aufgebaut werden, wobei zumindest in die Rückwandgruppe Komponenten einer Kühleinrichtung eingebaut werden, und dass parallel beabstandet von der Vorderseite der Vertikalprofile zwischen den hinteren Bereichen der unteren und der oberen Horizontalprofile Stützprofile eingebaut werden. Mit diesen Maßnahmen kann das Kühlregal in einfachen Montageschritten stabil aufgebaut werden.

Eine robuste Anordnung aus mehreren Kühlregalen wird dadurch erhalten, dass mehrere nebeneinander gereihte Kühlregale des vorstehend genannten Aufbaus an ihren benachbarten Seitenrahmen miteinander verbunden sind, wobei zwischen den Bodengruppen, den Rückwandgruppen und den Dachgruppen benachbarter Kühlregale Dichtmittel eingebracht sind.

Für den Aufbau und die Kühlfunktion sind des Weiteren die Maßnahmen von Vorteil, dass die unteren Horizontalprofile bodenseitig mit Füßen zum Abstützen auf dem Boden und Ausgleichen von Höhenunterschieden versehen ist. Erfindungsgemäß ist zwischen dem unteren und dem oberen Horizontalprofil im hinteren Bereich nach vorne von dem Vertikalprofil beabstandet bei beiden Seitenrahmen ein jeweiliges Stützprofil eingebaut. Zu einer energiesparenden Kühlfunktion tragen die Maßnahmen bei, dass das jeweilige aus Metall bestehende Stützprofil gegenüber dem unteren und oberen Horizontalprofil ohne metallische Verbindung über wärmeisolierende Zwischenstücke abstützend eingebaut ist.

Für den Aufbau und die Nutzung sind die Maßnahmen von Vorteil, dass die Stützprofile mit Lochreihen in vorgegebenem Rasterabstand versehen sind, an denen nach vorne in den Kühlraum vorkragende Tragarme für Regalböden einhängbar sind.

Für die Funktion und den Aufbau weitere vorteilhafte Maßnahmen bestehen in der Ausgestaltung mit einer in seitlicher Ansicht C-förmig aufgebauten Einheit mit der Bodengruppe, der Rückwandgruppe und der Dachgruppe, die den Kühlraum unten, hinten und oben begrenzen und zumindest zum Teil mit Komponenten einer Kühleinrichtung versehen sind, wobei die Einheit auf beiden Seiten einen C-förmigen Seitenrahmen aus Rahmenprofilen aufweist, wobei die Rückwandgruppe auf ihrer Rückseite mit der wärmeisolierenden plattenförmigen Außenverkleidung versehen ist, die entlang ihrer beiden vertikalen Längsrandbereiche mit den beiden Vertikalprofilen verbunden ist, die Bodengruppe eine mit den beiden unteren Horizontalprofilen verbundene wärmeisolierende Leitplatte aufweist und die Dachgruppe eine mit beiden oberen Horizontalprofilen verbundene wärmeisolierende plattenförmige obere Abdeckung aufweist und wobei die Außenverkleidung, die Leitplatte und die obere Abdeckung jeweils auf der dem Kühlraum zugewandten Innenseite der Rahmenprofile angeordnet sind.

Zu einer vorteilhaften Funktion bei einfacher Montage des Kühlregals tragen die Maßnahmen bei, dass die mit den beiden unteren Horizontalprofilen verbundene wärmeisolierende Leitplatte mit ihrem rückseitigen Rand an den unteren Rand der Außenverkleidung unmittelbar oder mittelbar über Übergangsmittel angrenzt und dass die wärmeisolierende plattenförmige obere Abdeckung mit ihrem rückseitigen Rand an den oberen Rand der Außenverkleidung unmittelbar oder mittelbar über weitere Übergangsmittel angrenzt. Mit diesen Maßnahmen ergibt sich eine vorteilhafte Wärmeisolierung des Kühlraums auf dessen Rückseite sowie im Dach- und Bodenbereich .

Zu der Kühlfunktion und dem Aufbau tragen ferner die Maßnahmen vorteilhaft bei, dass in einen Raum der Rückwandgruppe, der zwischen der Vorderseite der Außenverkleidung und einer von der Vorderseite der Stützprofile gebildeten Ebene liegt, ein Verdampfer oder ein anderer Wärmetauscher zur Kühlung des Kühlraums angeordnet ist und dass der Verdampfer oder andere Wärmetauscher mittels einer Tragvorrichtung auf der Vorderseite der Außenverkleidung angebracht ist.

Die Kühlfunktion wird auch dadurch begünstigt, dass in dem Raum der Rückwandgruppe auch mindestens ein Lüfter zum Erzeugen eines durch den Verdampfer oder durch den anderen Wärmetauscher mit Kühlleistung beaufschlagten Kaltluftstroms angeordnet ist, der zumindest teilweise in den Kühlraum geleitet ist. Vorteilhaft ist der mindestens eine Lüfter oberhalb des Verdampfers angeordnet, wodurch eine elektrische Störung oder Schädigung durch herabtropfende Flüssigkeit vermieden und eine gleichmäßige Luftströmung durch die Spalte zwischen den vertikal angeordneten Lamellen ohne Staudruck erreicht wird.

Eine für die Kühlfunktion vorteilhafte Ausgestaltung besteht darin, dass die Rückwandgruppe, die Bodengruppe und/oder die Dachgruppe eine geschichtete Struktur mit mehreren voneinander beabstandeten plattenförmigen Wandelementen aufweist, wodurch mindestens ein Zwischenraum für eine Luftführung gebildet ist.

Dabei werden der Aufbau und die Funktion dadurch begünstigt, dass die jeweiligen plattenförmigen Wandelemente zum Kühlraum hin auf der Außenverkleidung, auf der Oberseite der Leitplatte und/oder auf der Unterseite der oberen Abdeckung aufgebaut sind.

Ferner sind für den Aufbau und die Funktion die Maßnahmen von Vorteil, dass die plattenförmigen Wandelemente der Dachgruppe mittels an der Unterseite der beiderseitigen oberen Horizontalprofile befestigter wärmeisolierender Tragzapfen angebracht sind.

Eine energieeffiziente Kühlung wird ferner dadurch unterstützt, dass in der Rückwandgruppe, der Dachgruppe und der Bodengruppe miteinander in Verbindung gebrachte kühlraumseitige innere Zwischenräume für eine Kaltluftströmung und miteinander in Verbindung gebrachte, vom Kühlraum abliegende äußere Strömungskanäle für eine Warmluftströmung ausgebildet sind und dass auf der Vorderseite des Kühlregals mittels der Kaltluftströmung ein Kaltluftschleier und mittels der Warmluftströmung ein Warmluftschleier gebildet sind, durch die umlaufende Luftströmungen erzeugt sind und eine Isolierung des Kühlraums gegenüber der Umgebung bewirkt ist.

Für einen stabilen Aufbau einer Anordnung aus mehreren Kühlregalen sind die Maßnahmen von Vorteil, dass zwischen den miteinander verspannten benachbarten Seitenrahmen Distanzelemente eingebracht sind und dass die Dichtelemente zwischen einander zugekehrten schmalen Rändern der wärmeisolierenden Außenverkleidung, der wärmeisolierenden Leitplatten und der wärmeisolierenden oberen Abdeckung eingebracht sind.

Die Erfindung wird nachfolgend anhand von Ausführungsbeispielen unter Bezugnahme auf die Zeichnungen näher erläutert. Es zeigen:
- Fig. 1: drei zu einer Kühlregalanordnung aneinandergereihte Regalmodule (in noch nicht vollständig montiertem Zustand) in perspektivischer Ansicht von vorn, seitlich,
- Fig. 2: eine schematische Ansicht dreier Kühlregalanordnungen aus einem Regalmodul, zwei Regalmodulen bzw. drei Regalmodulen mit schematisch dargestellten Komponenten einer Kühleinrichtung mit einem Anschluss an einen zentralen Wärmetauscher,
- Fig. 3: eine perspektivische Ansicht eines Regalmoduls von schräg seitlich vorn in seitlich offener Darstellung,
- Fig. 4: eine offene Seitenansicht eines Regalmoduls,
- Fig. 5: einen unteren Abschnitt eines Regalmoduls in seitlicher offener Ansicht,
- Fig. 6: einen vorderen unteren Eckbereich einer Kühlregalanordnung in perspektivischer Ansicht schräg von vorn, seitlich, oben,
- Fig. 7: einen unteren Eckbereich einer Kühlregalanordnung bei weggelassener (unterer) Bodenplatte in perspektivischer Ansicht schräg von unten, vorn, seitlich,
- Fig. 8: einen oberen Abschnitt eines Regalmoduls in perspektivischer Ansicht schräg von seitlich, vorn, oben,
- Fig. 9A: einen oberen Abschnitt eines Regalmoduls in seitlicher offener Ansicht,
- Fig. 9B und 9C: einen oberen bzw. unteren hinteren Eckbereich eines Regalmoduls in perspektivischer Ansicht,
- Fig. 10: eine schematische Ansicht eines Regalmoduls in einem Querschnitt von einer Seite und
- Fig. 11A bis 11X: verschiedene Darstellungen zu Aufbauschritten eines Regalmoduls.

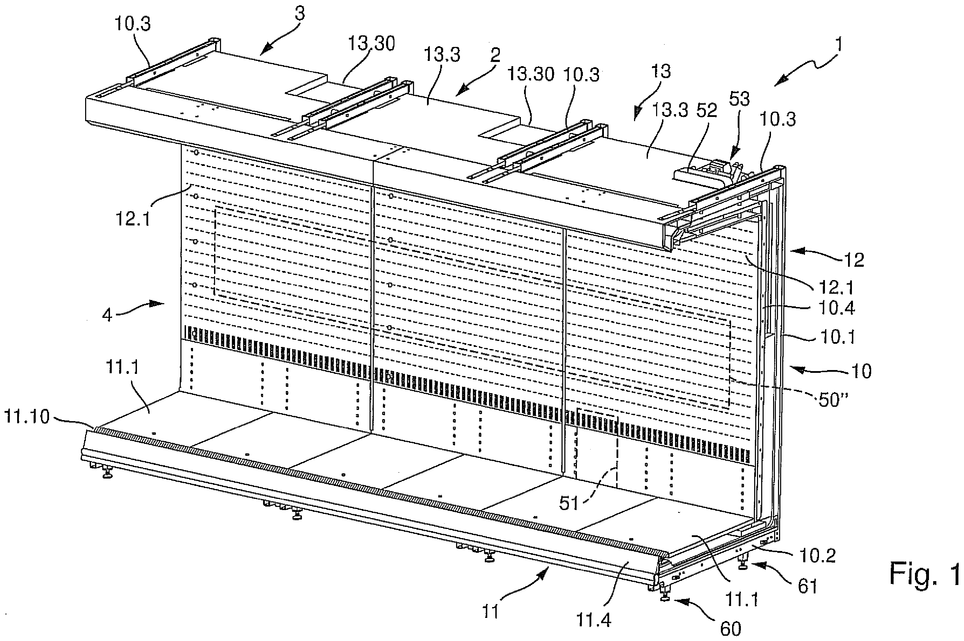

Fig.1 zeigt eine aus drei Regalmodulen 1, 2, 3 zu einer Kühlregalanordnung zusammengebauten Einheit, wobei die Kühlregalanordnung einen von vorne zugänglichen Kühlraum 4 auf der Rückseite sowie oben und unten sowie im Gebrauchszustand zumindest auch seitlich umgibt, wozu auf den beiden Seiten der Anordnung entsprechende Seitenwände angebracht werden. Die Vorderseite kann offen zugänglich sein oder für spezielle Anwendungen mit Türelementen versehen werden. Im Gebrauchszustand sind im Kühlraum 4 Regalböden angebracht, auf denen das Kühlgut, etwa Fleischwaren oder Milchprodukte oder dgl. in einem Verkaufsraum, aufgelegt ist. Ein einzelnes Regalmodul 1, 2, 3 kann als Kühlregal verwendet werden, wobei auf beiden Seiten Seitenwände angebracht sind und die Vorderseite offen oder mit mindestens einem Türelement verschlossen sein kann.

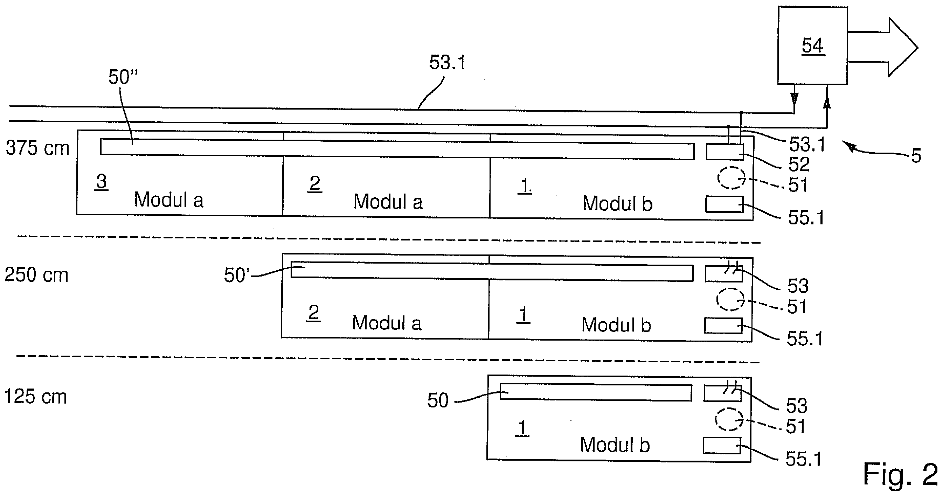

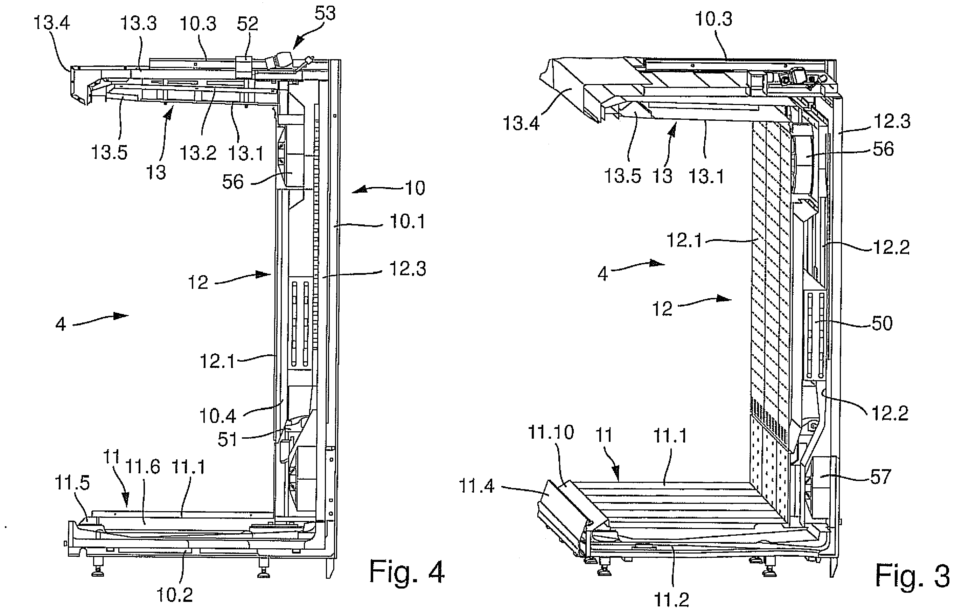

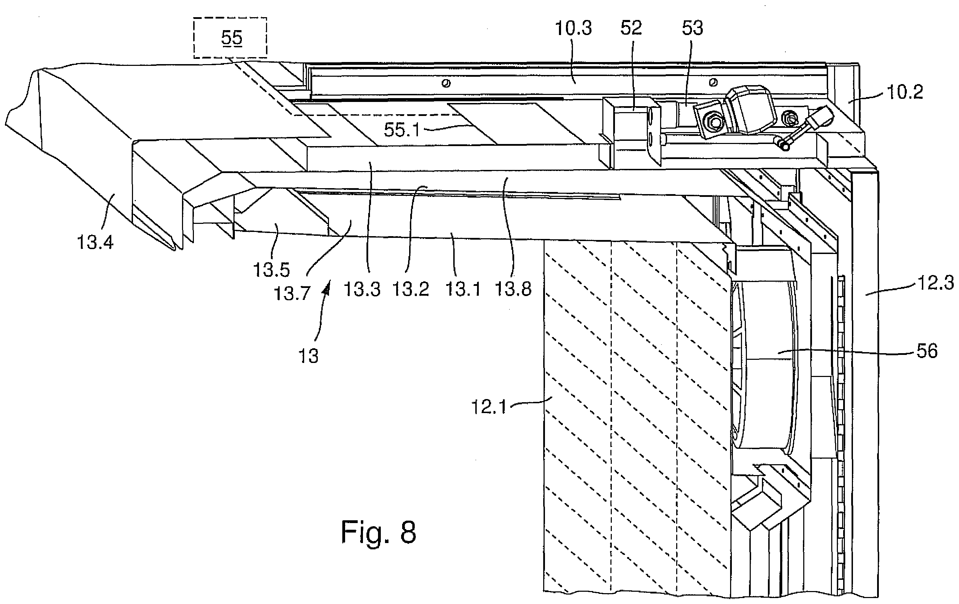

Zum Kühlhalten des Kühlraums 4 sind in der Kühlregalanordnung Komponenten einer Kühleinrichtung 5 (vgl. Fig. 2) integriert, insbesondere ein Verdampfer 50, 50', 50", ein Kompressor 51, ein Verflüssiger 52, eine Expansionsventilanordnung, Verbindungsmittel 53 einschließlich Verbindungsleitungen 53.1 sowie eine Steuereinheit 55.1 einer Steuerungseinrichtung 55 (vgl. Fig. 8) und ferner Lüfter 56, 57 zur Erzeugung bzw. Unterstützung erforderlicher Luftströme (vgl. Fig. 3). Der Verflüssiger 52 kann über entsprechende Verbindungsleitungen 53.1 über einen Sekundärkreis an einen z. B. in einem anderen Raum befindlichen Wärmetauscher 54 angeschlossen sein. Soweit erforderlich, kann z. B. eine größere Kühlregalanordnung auch mehrere gleichartige Komponenten der Kühleinrichtung 5 umfassen.

Der Verflüssiger 52 mit entsprechenden Verbindungsmitteln 53 ist in bevorzugter Ausgestaltung gemäß dem gezeigten Ausführungsbeispiel in oder auf einer Dachgruppe 13 in einer dort ausgebildeten oberen Kühikomponentenaufnahme 13.30 im Bereich einer oberen Abdeckung 13.3 von oben oder hinten gut zugänglich angeordnet, während der Kompressor 51 bevorzugt im unteren Bereich einer Rückwandgruppe 12 hinter einer den Kühlraum 4 nach hinten begrenzenden Innenabdeckung 12.1 in einer (nicht näher gezeigten) Aufnahmekammer einer Aufnahmeeinrichtung angeordnet ist. Im mittleren Bereich der Rückwandgruppe 12 ist der Verdampfer 50, 50', 50" ebenfalls hinter der Innenabdeckung 12.1 angeordnet und mit Mitteln der Aufnahme-einrichtung montiert. Wie aus Fig. 1 ersichtlich, erstreckt sich der Verdampfer 50" durchgehend über alle drei Regalmodule 1, 2, 3, während der Kompressor 51 und der Verflüssiger 52 für alle drei Regalmodule 1, 2, 3 der Regalanordnung gemeinsam in nur einem, und zwar bei dem Ausführungsbeispiel nach Fig. 1 in dem rechten Regalmodul 1 angeordnet und an den Verdampfer 50" über entsprechende Verbindungsleitungen unter Zwischenschaltung betreffender Zwischenglieder der Kühleinrichtung 5, wie Expansionsventil bzw. Drossel, angeschlossen sind.

Außer der bereits genannten Dachgruppe 13 und Rückwandgruppe 12 weist jedes Regalmodul 1, 2, 3 auch eine Bodengruppe 11 auf. Diese begrenzt mit einer oben liegenden Bodenabdeckung 11.1 den Kühlraum 4 nach unten hin und trägt an ihrer Vorderseite ein mit Luftdurchtrittslöchern, insbesondere Luftdurchtrittsschlitzen, versehenes Abdeckgitter 11.10 sowie eine Frontabdeckung 11.4 mit Stoß- oder Zierleiste im unteren vorderen Randbereich.

Wesentlicher Bestandteil jedes Regalmoduls 1, 2, 3 sind auf jeder Seite derselben angeordnete Seitenrahmen 10 mit in Seitenansicht C-förmiger Gestalt mit einem Vertikalprofil 10.1 entlang der Rückseite, einem unten an diesem angeschlossenen und nach vorne vorstehenden unteren Horizontalprofil 10.2 und einem oberen, am oberen Endabschnitt des Vertikalprofils 10.1 angeschlossenen, nach vorne vorstehenden oberen Horizontalprofil 10.3, wobei in der gezeigten Darstellung das untere Horizontalprofil 10.2 weiter nach vorne vorsteht als das obere Horizontalprofil 10.3. Bei weiteren Untersuchungen hat sich herausgestellt, dass aber ein verglichen mit dem unteren Horizontalprofil 10.2 genauso langes oder längeres oberes Horizontalprofil 10.3 von Vorteil sein kann, um z.B. einen oberen Vorbau mit Rollo und einer Beleuchtungseinrichtung stabil und ohne Durchbiegung zu tragen. Vor dem Vertikalprofil 10.1 ist von diesem nach vorne beabstandet zwischen dem unteren und oberen Horizontalprofil 10.2, 10.3 ein Stützprofil 10.4 eingebaut. Das untere Horizontalprofil 10.2 ist auf daran angebrachten Füßen 60, 61 mit Nivelliermöglichkeit abgestützt. Die beiden Seitenrahmen 10 eines jeden Regalmoduls 1, 2, 3 tragen mittels ihrer unteren Horizontalprofile 10.2 die Bodengruppe 11, mittels ihrer Vertikalprofile 10.1 und Stützprofile 10.4 die Rückwandgruppe 12 und mittels ihrer oberen Horizontalprofile 10.3 die Dachgruppe 13 und ergeben einen stabilen Aufbau mit einfachen Montageschritten. Zudem gewährleisten sie eine stabile Aneinanderreihung mehrerer Regalmodule 1, 2, 3 zu der Kühlregalanordnung, wobei die Kühlregalanordnung als stabile Einheit transportfähig mittels eines Hebegeräts oder Fahrzeugs ist.

Wie Fig. 2 zeigt, besteht ein vorteilhaftes Ausführungsbeispiel einer Kühlregalanordnung darin, dass lediglich ein Regalmodul 1 mit allen Komponenten einer Kühleinrichtung bis auf den evtl. vorgesehenen zentralen Wärmetauscher 54 mit betreffenden hin- und rückführenden Verbindungsleitungen 53.1 versehen ist (Modul mit Ausbautyp b), während die übrigen Regalmodule einer Kühlregalanordnung lediglich mit einem Verdampfer 50, 50', 50" versehen sind, wobei der Verdampfer 50, 50', 50" vorteilhaft (aber nicht notwendigerweise) als eine durchgehende Einheit ausgestaltet ist (Module des Ausbautyps a). Der Verdampfer der Module des Ausbautyps a ist über entsprechende Verbindungsmittel 53 einschließlich Verbindungsleitungen 53.1 und gegebenenfalls elektrischer Verkabelung für eine Signalübertragung (Sensorik, Steuerung) und elektrische Energieversorgung an die übrigen betreffenden Komponenten der Kühleinrichtung in dem Regalmodul 1 des Ausbautyps b angeschlossen. Alle Regalmodule 1, 2, 3 sind in gleicher Weise jedoch zur Aufnahme aller erforderlicher Komponenten der Kühleinrichtung 5 und auch mit vorinstallierten Abschnitten der Verbindungsleitungen 53.1 sowie Verbindungsmitteln für eine einfache, schnelle Verbindung zwischen den Kühlkomponenten der Regalmodule und gegebenenfalls mit dem zentralen Wärmetauscher 54 vorbereitet, so dass Module eines Ausbautyps mit geringem Montageaufwand in ein Modul des anderen oder gegebenenfalls eines noch anderen Ausbautyps mit anderen oder weiteren Komponenten der Kühleinrichtung umgerüstet werden können. Auch kann beispielsweise in einer Kühlregalanordnung mit einer größeren Anzahl von Regalmodulen mehr als nur ein Regalmodul des Ausbautyps b bzw. eines Ausbautyps mit zusätzlichen Komponenten der Kühleinrichtung vorhanden sein.

Ein über mehrere Regalmodule 1, 2, 3 durchgehender Verdampfer 50', 50" kann auch nachträglich noch relativ leicht zwischen den betreffenden Vertikalprofilen 10.1 und den unter Abstand davor liegenden Stützprofilen 10.4 eingesetzt und an den Vertikalprofilen und/oder einer Zwischenabtrennung, insbesondere einer Zwischenwand 12.2 befestigt werden. Der nachträgliche Einbau erfolgt z. B. durch Einführen des Wärmetauschers 50', 50" von einer Seite parallel zur Rückwandebene oder von vorn, nachdem betreffende Stützprofile 10.4 ausgebaut worden sind, die anschließend wieder eingebaut werden. Wie weiter unten noch näher beschrieben, ergibt die besondere Montageweise der Stützprofile 10.4 einen einfachen Ein- und Ausbau.

Wie Fig. 2 weiter zeigt, braucht bei dem gezeigten Aufbau nur ein Regalmodul 1 mit den vorbereiteten Verbindungsmitteln 53, die beispielsweise Schnellkupplungen und steuerbare Ventile enthalten, an den zentralen Wärmetauscher 54 angeschlossen zu werden, während die übrigen Regalmodule 2, 3 lediglich über die integrierten Verbindungsmittel 53 auf einfache Weise miteinander verbunden werden. Der zentrale Wärmetauscher 54 ist dabei in der Regel über einen Sekundärkreis an den Verflüssiger 52 des betreffenden Regalmoduls 1 (Ausbautyp b) angeschlossen, wobei in dem Sekundärkreis z. B. ein von einem in der Kühlregalanordnung geführten Kühlmittel unterschiedliches Kühlmittel verwendet wird. Für den Verflüssiger 52 kann z. B. ein kompakter Platten- oder Röhrenwärmetauscher verwendet werden. In dem zentralen Wärmetauscher 54 anfallende Wärme kann für eine anderweitige Nutzung der Wärmeenergie abgeführt werden, wie mit dem Pfeil oben rechts angedeutet.

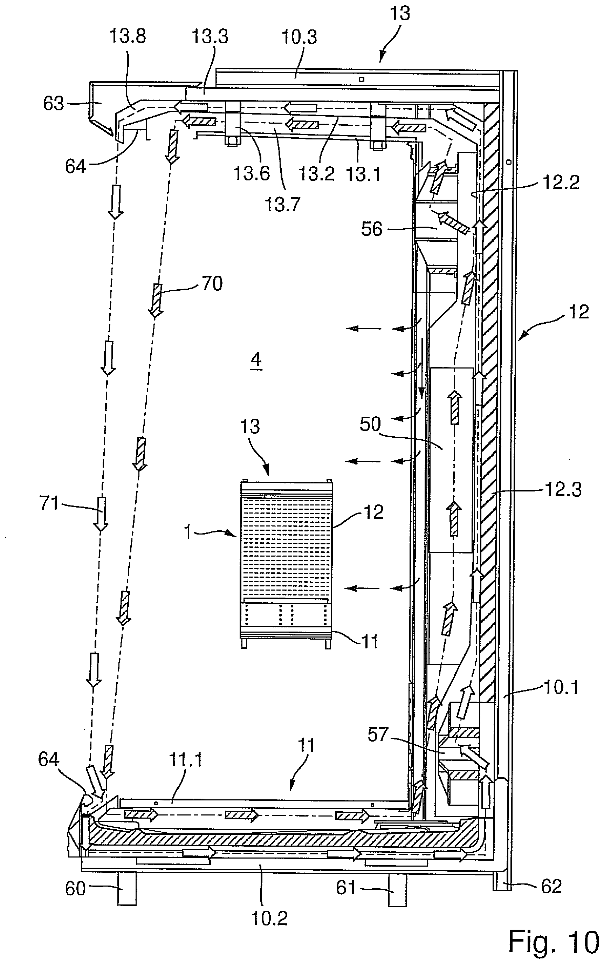

Wie die Fig. 3 und 4 erkennen lassen, sind die Bodengruppe 11, die Rückwandgruppe 12 und die Dachgruppe 13 mehrschichtig mit darin ausgebildeten Zwischenräumen für die Luftführung ausgestaltet. Die Luftführung wird mittels Lüftern 56, 57 bewirkt bzw. unterstützt, die beispielsweise als Radiallüfter oder Diagonallüfter ausgebildet sind und von denen bei dem gezeigten Ausführungsbeispiel einer im unteren Bereich und einer im oberen Bereich der Rückwandgruppe 12 angeordnet ist oder alternativ zwei im oberen Bereich der Rückwandgruppe 12 angeordnet sind. Der oder die oberen Lüfter 56/57 bewirkt bzw. bewirken dabei die Luftströmung durch den Verdampfer 50, 50', 50" von unten nach oben, wie in Fig. 10 verdeutlicht ist. Ein Teil des durch den Verdampfer 50, 50', 50" gebildeten Kühlluftstroms wird dabei auf der Rückseite der Innenabdeckung 12.1 wieder nach unten geleitet und strömt durch in der Innenabdeckung 12.1 vorhandene Lüftungsschlitze in den Kühlraum 4, um diesen auf der erforderlichen Kühltemperatur zu halten. Um eine optimale Kühlung zu erreichen, kann dieser in den Kühlraum 4 geleitete Kühlluftstrom weiter aufgefächert und geeignet z. B. unter Verringerung des Strömungswiderstandes nach unten hin angepasst werden. Ein weiterer Teil der Kühlluftströmung wird von dem oberen Lüfter 56 durch den vertikalen inneren Zwischenraum 12.4 der Rückwandgruppe 12 in einen damit in Verbindung stehenden oberen Zwischenraum 13.7 in der Dachgruppe 13 entlang der Oberseite einer den Kühlraum 4 nach oben begrenzenden unteren Abdeckung 13.1 bis zu einem vorderen Dachabschnitt 13.4 geführt, wo sie auf dessen Unterseite durch eine spaltartige Austrittsöffnung 13.50 mit einem Austrittsgitter 13.5 austritt und auf der Vorderseite einen Kaltluftschleier 70 bildet (vgl. Fig. 10). Die Luftströmung des Kaltluftschleiers 70 tritt anschließend im vorderen Bereich der Bodengruppe 11 durch eine dort vorhandene, mit dem Abdeckgitter 11.10 abgedeckte, entlang der Vorderseite ausgedehnte Eintrittsöffnung 11.11 in den Zwischenraum 11.6 unterhalb der Bodenabdeckung 11.1 wieder ein, um erneut durch den damit in Strömungsverbindung stehenden inneren vertikalen Zwischenraum 12.4 der Rückwandgruppe 12 im Kreislauf durch den Verdampfer und den oberen Lüfter 56 zu strömen. Die Bodenabdeckung 11.1, die Innenabdeckung 12.1 und die untere Abdeckung 13.1 der Dachgruppe 13 sind für eine gute Übertragung der Kühlleistung zum Kühlraum 4 hin aus dünnwandigen Platten, insbesondere aus Metall oder Kunststoff ausgebildet, die zudem gut handhabbar und reinigbar sind. Die Platten der Bodenabdeckung 11.1 sind vorteilhaft in Breitenrichtung segmentiert und erstrecken sich von der Eintrittsöffnung 11.11 im vorderen Bereich der Bodengruppe 11 bis zum unteren Bereich der Innenabdeckung 12.1 der Rückwandgruppe 12. Die Platten der Innenabdeckung 12.1 der Rückwandgruppe 12 sind vorteilhaft in vertikaler Richtung segmentiert und erstrecken sich über die gesamte Breite zwischen den beiden Seitenrahmen 10 eines Regalmoduls 1, 2, 3, wobei mehrere vertikal übereinander angeordnete Platten leicht handhabbar eingesetzt bzw. abgenommen werden können, um z. B. betreffende Komponenten der Kühleinrichtung 5 freizulegen, zu reinigen bzw. ein- oder auszubauen.

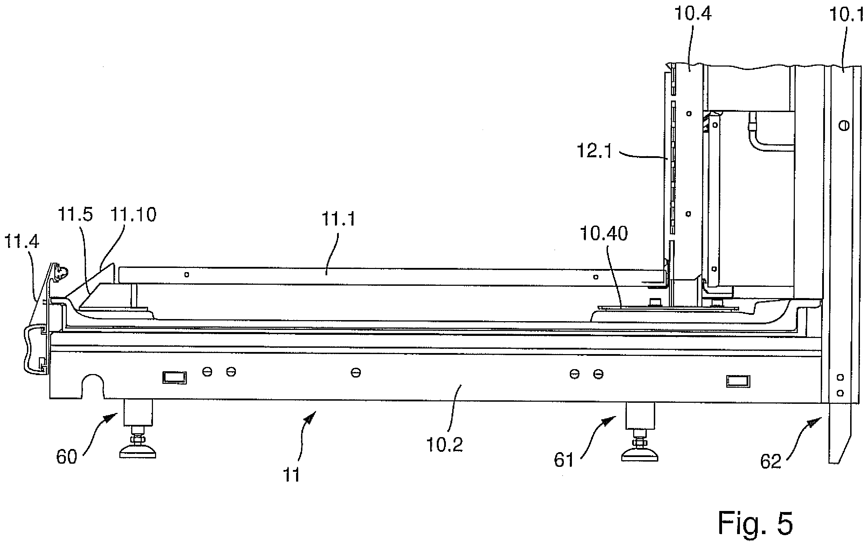

Wie aus den Fig. 5, 6 und 7 näher ersichtlich, ist die Bodenabdeckung 11.1 im vorderen Bereich auf mehreren blockförmigen Auflagemitteln 11.5, z. B. Kunststoffblöcken aus Hart-Kunststoff und im hinteren Bereich auf weiteren Auflagemitteln aufgelegt, die z. B. als Auflegewinkel mit nach vorne ragendem Auflageschenkel ausgebildet sind, insbesondere als eine an dem unteren Abschnitt der Stützprofile 10.4 der beiden Seitenrahmen 10 angebrachte Winkelleiste.

Unterhalb des auf der Unterseite der Bodenabdeckung 11.1 gebildeten unteren Zwischenraums 11.6 ist eine Leitplatte 11.2 aus wärme- und geräuschdämmendem Kunststoff angeordnet, die auf ihrer Oberseite gleichzeitig eine Auffangwanne für auftretende Flüssigkeit bildet und ein Ablaufloch 11.21 aufweist, an das ein Ablaufrohrsystem angeschlossen ist. Auf der Unterseite ist die Leitplatte 11.2 mit einer Formkanalanordnung 11.20 versehen, mittels deren unterhalb der Leitplatte 11.2 ein unterer äußerer horizontaler Zwischenraum als unterer äußerer Luft-Strömungskanal 11.7 gebildet wird, der auf der Unterseite der Bodengruppe 11 mittels einer Bodenplatte 11.3 oder mehreren Teilbodenplatten bzw. Abdeckplatten nach unten abgedeckt ist.

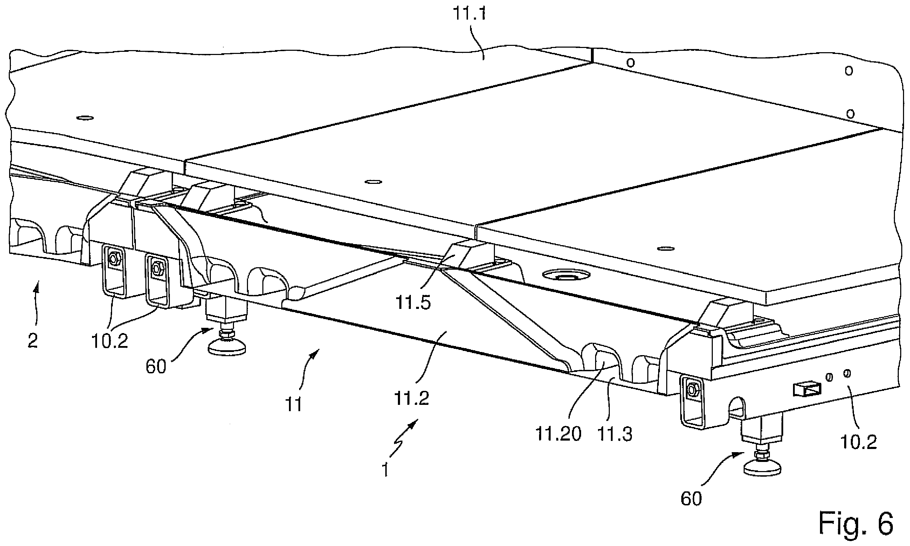

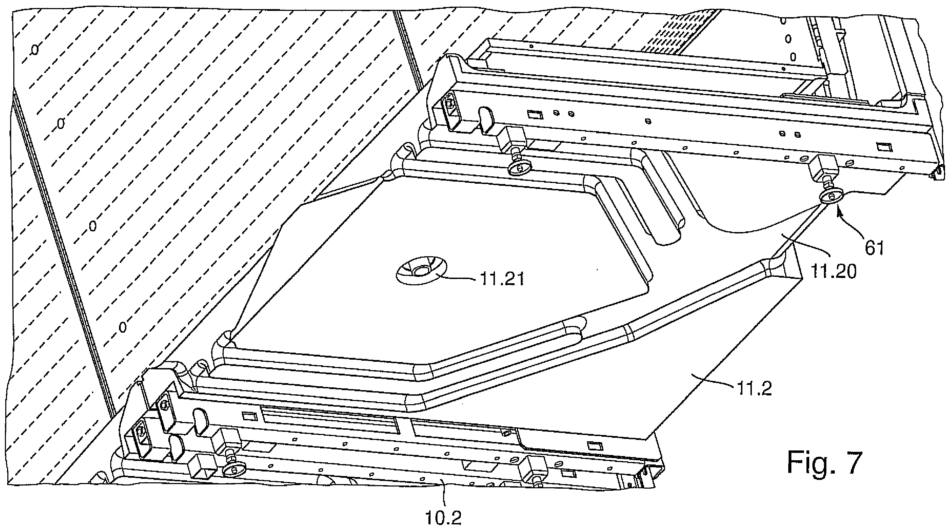

Wie die Fig. 6 und 7 zeigen, sind zum Bilden des unteren äußeren horizontalen Luft-Strömungskanals 11.7 mehrere von der Vorderseite der Leitplatte 11.2 von jeweiligen Eingangsöffnungen 11.70 ausgehende Kanäle der Formkanalanordnung 11.20 im hinteren Bereich der Leitplatte 11.2 auf deren Unterseite zusammengeführt und gehen über eine relativ breite rückseitige Ausnehmung bzw. Einformung der Leitplatte 11.2 in einen damit in Strömungsverbindung gebrachten hinteren, äußeren vertikalen Zwischenraum bzw. äußeren vertikalen Strömungskanal 12.5 der Rückwandgruppe 12 über, der zwischen der Vorderseite der Außenverkleidung 12.3 und einer Zwischenabtrennung mit einer Zwischenwand 12.2 zwischen der Außenverkleidung 12.3 und der Innenabdeckung 12.1 gebildet ist, wie auch aus Fig. 3 und teilweise aus Fig. 10 ersichtlich. Um den Übergang zwischen dem unteren äußeren Luft-Strömungskanal 11.7 und dem unteren Abschnitt des äußeren vertikalen Strömungskanals 12.5 herzustellen, kann der untere Bereich der relativ dickwandigen isolierenden Außenverkleidung 12.3 ausgespart und z. B. nur eine rückseitige dünne Abdeckplatte stehen gelassen sein, mit der eine isolationsschicht der Außenverkleidung 12.3 rückseitig abgedeckt ist. Die Aussparung in der isolierenden Außenverkleidung 12.3 kann z. B. durch nachträgliches Ausschneiden der vorderseitigen dünnen Abdeckplatte und der Isolationsschicht oder bereits bei der Herstellung durch Freilassen dieses Bereichs beim Schäumen und Ausnehmen der vorderseitigen Abdeckplatte erfolgen. Auf diese Weise lassen sich der Übergang und ein unterer Abschnitt des vertikalen äußeren Strömungskanals 12.5 geeignet anordnen und z. B. hinter dem unteren Lüfter 57 und seitlich an einem auf einer Seite unten in der Rückwandgruppe 12 untergebrachten Kompressor (vgl. Fig. 1) vorbeiführen. Anschließend ist der vertikale äußere Strömungskanal 12.5 nach oben praktisch über die gesamte Breite der Rückwandgruppe 12 mittels Leitelementen erweitert.

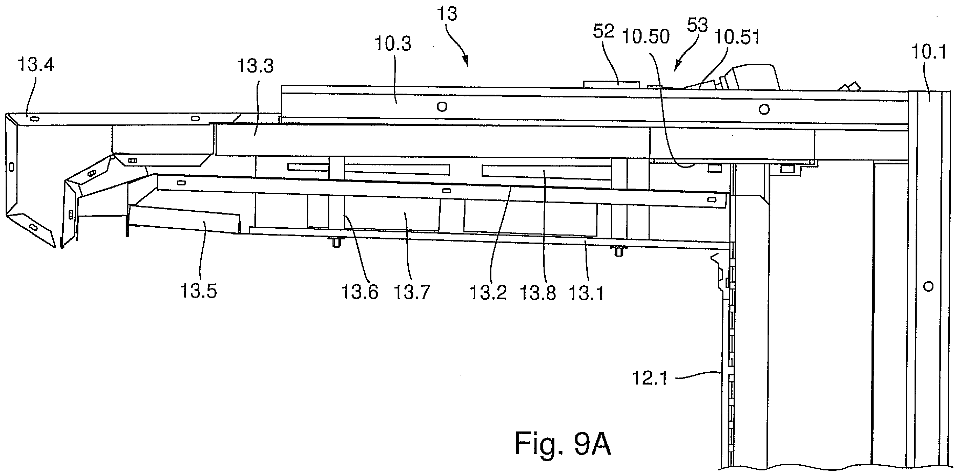

Der in dem unteren Bereich der Rückwandgruppe 12 angeordnete Lüfter 57 befindet sich in dem äußeren vertikalen Zwischenraum bzw. in dem dadurch gebildeten vertikalen äußeren Strömungskanal 12.5, der über die Zwischenabtrennung mit der Zwischenwand 12.2 hinter dem Verdampfer 50, 50', 50" vor der Außenverkleidung 12.3 hindurch nach oben verläuft und an einen äußeren oberen Zwischenraum bzw. äußeren oberen Strömungskanal 13.8 unter Bildung einer Strömungsverbindung angeschlossen ist, wie aus den Fig. 8 und 9A in Verbindung mit Fig. 10 ersichtlich ist. In der Dachgruppe 13 ist der äußere obere Strömungskanal 13.8 von dem inneren oberen Strömungskanal 13.7 mittels einer Zwischenabdeckung 13.2 getrennt und führt zwischen der Zwischenabdeckung 13.2 und der Unterseite der oberen Abdeckung 13.3 bis zu dem vorderen Dachabschnitt 13.4 und tritt dort durch einen auf der Unterseite gebildeten, beabstandet vor der Austrittsöffnung 13.50 mit dem Austrittsgitter 13.5 liegenden Austrittsspalt 13.80 aus, um auf der Vorderseite des betreffenden Regalmoduls 1, 2, 3 bzw. der Kühlregalanordnung einen vor dem Kaltluftschleier 70 liegenden Warmluftschleier 71 zu bilden. Die von dem Warmluftschleier 71 gebildete Luftströmung tritt im vorderen Bereich der Bodengruppe 11 in eine vor dem Abdeckgitter 11.10 liegende spaltartige Eintrittsöffnung in den unteren äußeren Zwischenraum bzw. unteren äußeren Strömungskanal zum Bilden eines Warmluftkreislaufs ein.

Wie insbesondere aus den Fig. 9A und 10 weiterhin ersichtlich ist, sind in der Dachgruppe 13 die untere Abdeckung 13.1, die Zwischenabdeckung 13.2 und die obere Abdeckung 13.4 mittels mehrerer gemeinsam genutzter Tragezapfen 13.6 im Abstand gehalten, um den inneren oberen Zwischenraum 13.7 und den äußeren oberen Strömungskanal 13.8 zu bilden. Die obere Abdeckung 13.3 ist dabei wärmeisolierend als Dämmplatte aus Isolierstoff ausgebildet, beispielsweise entsprechend der Außenverkleidung 12.3. Die dämmende Abdeckung 13.3 bildet zusammen mit der dämmenden Außenverkleidung 12.3 der Rückwandgruppe 12 und der dämmenden Leitplatte 11.2 der Bodengruppe 11 eine schalenartige Wärmeisolierung.

Bei dem gezeigten Ausführungsbeispiel sind die dämmende Außenverkleidung 12.3 der Rückwandgruppe 12 sowie die dämmende obere Abdeckung 13.3 der Dachgruppe 13 und die dämmende Leitplatte 11.2 der Bodengruppe 11 jeweils auf der dem Kühlraum 4 zugewandten Innenseite der Vertikalprofile 10.1, der oberen Horizontalprofile 10.3 bzw. der unteren Horizontalprofile 10.2 der zugehörigen Seitenrahmen 10 angebracht. Die Außenverkleidung 12.3 ist zumindest auf ihrer dem Kühlraum 4 zugekehrten Innenseite mit einer stabilen Beschichtung versehen oder insgesamt als stabile tragfähige Platte ausgeführt, um darauf z. B. mittels vertikaler Abstandsprofile, die beispielsweise H-förmigen Querschnitt besitzen, die Zwischenwand 12.2 der Zwischenabtrennung unter betreffendem Abstand für den äußeren vertikalen Zwischenraum stabil anzubringen. Die Zwischenwand 12.2 kann ihrerseits an den vertikalen Rändern z. B. Z-förmig mit nach außen abstehenden flanschartigen Endabschnitten abgekantet und auf der dem Kühlraum 4 zugewandten Seite der Außenverkleidung 12.3 befestigt sein, z. B. mittels Schrauben oder Nieten.

Die beispielsweise aus Stahlblech bzw. einem anderen geeigneten Metall bestehende Zwischenwand 12.2 bietet eine stabile Tragbasis für die Anbringung des Verdampfers 50, 50', 50", der sich vorteilhaft über mehrere Regalmodule 1, 2, 3 erstreckt, wie vorstehend beschrieben. Der Verdampfer 50, 50', 50" der aus den Regalmodulen 1, 2, 3 zugeordneten Abschnitten aufgebaut sein kann, befindet sich damit im Bereich des Kaltluftkanals vor dem Warmluftkanal und ist darin stabil mittels Verbindungsmitteln der Aufnahmeeinrichtung angebracht, z. B. mittels Befestigungsschrauben und Befestigungslaschen. Zumindest auf einer Seite ist bei einem sich über mehrere Regalmodule 1, 2, 3 erstreckenden Verdampfer 50, 50' 50" genügend Platz vorhanden (vgl. z. B. Fig. 1), so dass in diesem Bereich Verbindungsmittel zum Anschließen von Leitungen für die Kältemittelzufuhr und Einspritzen des Kältemittels, wie z. B. mehrere Einspritzventile der Einspritzanordnung, für die Verdampfung angeordnet werden können. Der Verdampfer 50, 50', 50" ist dabei nicht an Rahmenprofilen oder Stützprofilen befestigt, so dass sich zum einen keine Wärmeübertragung über den Rahmen nach außen ergibt und zum anderen die Stützprofile 10.4 ungehindert ein- und ausgebaut werden können.

Bei alternativen Ausführungsbeispielen kann anstelle eines Verdampfers für die Kühlung auch ein anderer Wärmetauscher in der Rückwandgruppe 12 oder im oberen Bereich des Kühlregals eingebaut sein, wobei das Kältemittel vorteilhaft in einem entfernt positionierten zentralen Wärmetauscher (z. B. mit einem Kaltwassersatz) gekühlt wird.

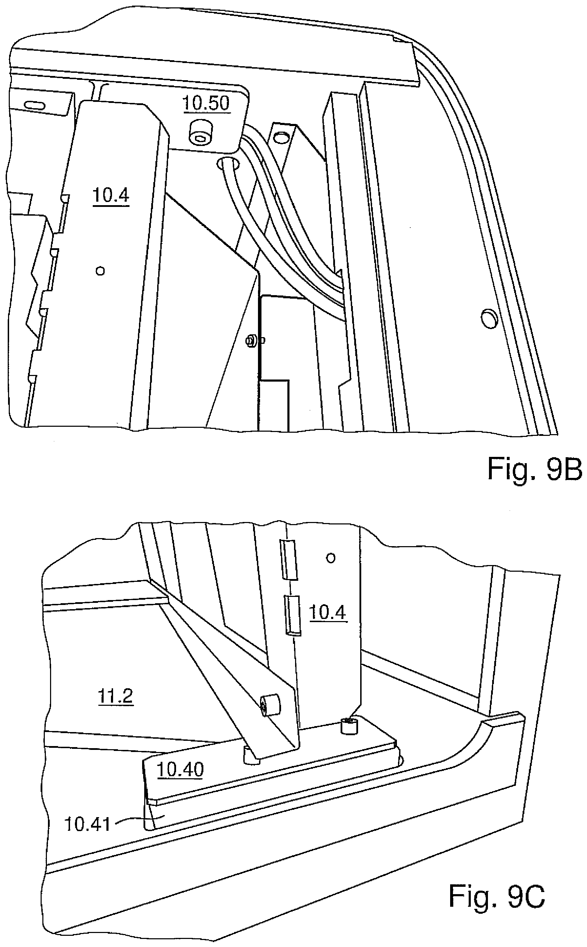

Das Stützprofil 10.4 ist auf der Unterseite des oberen Horizontalprofils 10.3 des Seitenrahmens 10 über ein von vorne nach hinten verlängertes Zwischenstück und eine obere Stützplatte 10.50 (s. Fig. 9B) stabil abgestützt und verschraubt. Wie bereits Fig. 5 zeigt und in den Fig. 9B und 9C verdeutlicht, ist das Stützprofil 10.4 auf seiner Unterseite mittels einer von vorn nach hinten ausgedehnten Stützplatte 10.40 gegenüber der Oberseite des unteren Horizontalprofils 10.2 des betreffenden Seitenrahmens 10 abgestützt, wobei vorteilhaft ein Zwischenstück 10.41 aus Hart-Kunststoff eingefügt ist, wodurch eine Wärmeisolierung und auch Geräuschdämmung bewirkt wird. Die Stützprofile 10.4 können infolge dieser Anbringung einfach ein- und ausgebaut werden. Die Befestigungselemente für die Zwischenstücke an den Horizontalprofilen 10.2, 10.3 einerseits und für die Stützplatten 10.40, 10.50 der Stützprofile 10.4 an den Zwischenstücken andererseits sind dabei in der Weise versetzt angeordnet, dass kein durchgehender metallischer wärmeleitender Kontakt zwischen Stützprofil 10.4 und horizontalen Rahmenprofilen 10.2 und 10.3 zustande kommt.

Die metallischen Stützprofile 10.4 sind mit Lochreihen in einem vorgegebenen, vorzugsweise standardisierten Rasterabstand versehen, in denen die Platten der Innenabdeckung 12.1 der Rückwandgruppe 12 einfach ein- und aushängbar angebracht sind. Auch Tragarme für die Regalböden können an den Stützprofilen leicht in gewünschter Höhe eingehängt werden.

An dem unteren Endabschnitt der Vertikalprofile 10.1 sind nach unten vorstehende Kippsicherungen 62 angebracht, die vorteilhaft eine Anpassung an Bodenunebenheiten z. B. durch federnde bzw. elastische Zwischenelemente und/oder Verstellelemente zulassen. Im vorderen Bereich der Bodengruppe 11 und/oder der Dachgruppe 13 kann eine Beleuchtungseinrichtung 64 angeordnet sein. Im vorderen oberen Bereich ist vorteilhaft ein Rollo 63 angeordnet, um z. B. außerhalb der Geschäftszeiten den Kühlraum nach vorne zu verschließen und Kühlenergie einzusparen.

Zum Abdichten der Zwischenräume in den Bodengruppen 11, Rückwandgruppen 12 und Dachgruppen 13 der Regalmodule 1, 2, 3 sind seitlich Dichtmittel eingebracht.

Die Dichtmittel sind dabei vorteilhaft z. B. zwischen den benachbarten Außenverkleidungen 12.3, den oberen Abdeckungen 13.3 und insbesondere auch zwischen den Leitplatten 11.2 eingesetzt. Zwar können auch zwischen den Seitenrahmen 10 benachbarter aneinandergereihter Regalmodule 1, 2, 3 zusätzlich Dichtungselemente eingefügt sein, um eine Abdichtung des Kühlraums 4 zwischen den Regalmodulen 1, 2, 3 zu bewirken, jedoch sind die Seitenrahmen 10 normalerweise lediglich über zwischengesetzte Abstandselemente, wie z. B. Distanzhülsen, in definierter Positionierung und stabil miteinander verspannt. Als Dichtmittel kommen verschiedene Ausführungen von Dichtelementen in Betracht, wie z. B. im Querschnitt pilzförmige Dichtungsstreifen mit Lamellen.

Für die seitliche Abdichtung der inneren Zwischenräume 11.6, 12.4, 13.7 für die Kaltluftströmung und der äußeren Strömungskanäle 11.7, 12.5, 13.8 für die Warmluftströmung kommen verschiedene seitliche Abschottungen in Betracht. Bei einem in einem Versuchsaufbau erprobten Ausführungsbeispiel sind bei mehreren aneinandergereihten Regalmodulen 1, 2, 3 die inneren Zwischenräume 12.4 der Rückwandgruppe 12 durchgängig über die gesamte Regalanordnung miteinander in Verbindung gebracht und nur an den beiden Endseiten der Regalanordnung mit betreffenden Abschottungen vorteilhaft unter Abdichtung abgeschlossen. Dies hat den Vorteil, dass ungehindert ein durchgehender Verdampfer 50', 50" eingesetzt werden kann. Hingegen sind die inneren Zwischenräume 11.6 und 13.7 der Bodengruppe 11 und Dachgruppe 13 bei einer vorteilhaften Ausführungsvariante auf beiden Seiten jedes Regalmoduls 1, 2, 3 abgeschottet und über passende Luftleitbleche mit dem vertikalen inneren Zwischenraum 12.4 in Verbindung gebracht, um ungünstige Strömungsleckagen zu vermeiden. Die Innenabdeckung 12.1 der Rückwandgruppe 12 in den Übergangsbereichen zwischen den aneinandergereihten Regalmodulen 1, 2, 3 ist mittels Zwischenplatten ergänzt.

Die äußeren Strömungskanäle 11.7, 12.5, 13.8 sind bei dem erprobten Ausführungsbeispiel jeweils pro Regalmodul 1, 2, 3 abgeschottet. In der Rückwandgruppe 12 geschieht dies im Bereich der Zwischenwand 12.2 beispielsweise mittels deren seitlichen Abkantungen, oder mittels eingesetzter Leisten, entsprechend auch im Bereich der Dachgruppe 13, im Bereich der Bodengruppe 11 z. B. durch die Einformungen auf der Unterseite der Leitplatte 11.2.

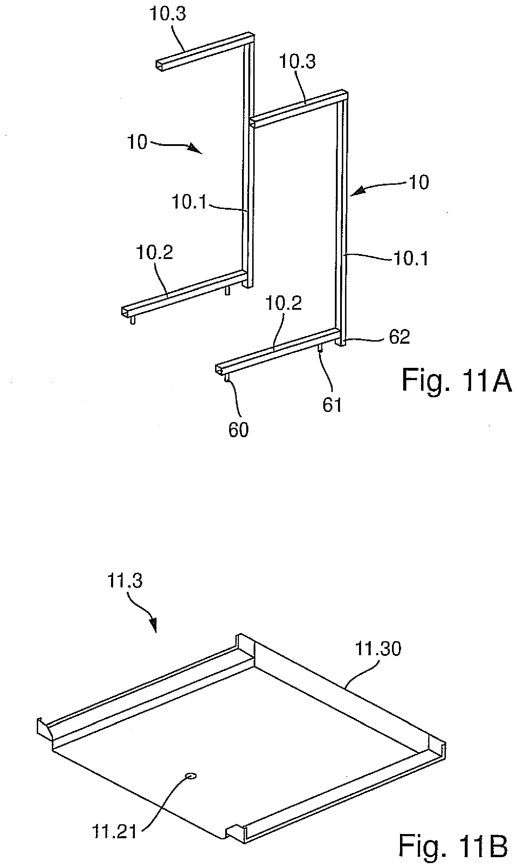

Die Fig. 11A bis 11X zeigen ein Ausführungsbeispiel für aufeinander folgende Montageschritte beim Aufbau eines Regalmoduls 1, 2, 3 bzw. Kühlregals sowie einer Anordnung aus zwei Regalmodulen. Soweit erwünscht, können dabei auch einzelne Montageschritte weggelassen, geändert oder vertauscht werden.

Zunächst werden gemäß Fig. 11A zwei Seitenrahmen 10 aus jeweils einem Vertikalprofil 10.1, einem in dessen unterem Bereich vorstehenden unteren Horizontalprofil 10.2 und einem in dessen oberem Bereich vorstehenden oberen Horizontalprofil 10.3 bereitgestellt. Die unteren Horizontalprofile 10.2 sind auf ihrer Unterseite mit den höhenverstellbaren Füßen 60, 61 versehen und am unteren Ende der Vertikalprofile 10.1 steht die Kippsicherung 62 nach unten vor. Bei dem gezeigten Ausführungsbeispiel ist das obere Horizontalprofil 10.3 kürzer als das untere Horizontalprofil 10.2 ausgeführt, jedoch kann bei ebenfalls vorteilhafter Ausführung das obere Horizontalprofil 10.3 genauso lang oder länger ausgeführt sein als das untere Horizontalprofil 10.2, um die Dachgruppe 13 stabil anbringen zu können. Die beiden Seitenrahmen 10 werden entsprechend der Breite des Regalmoduls 1, 2, 3 voneinander beabstandet aufgestellt.

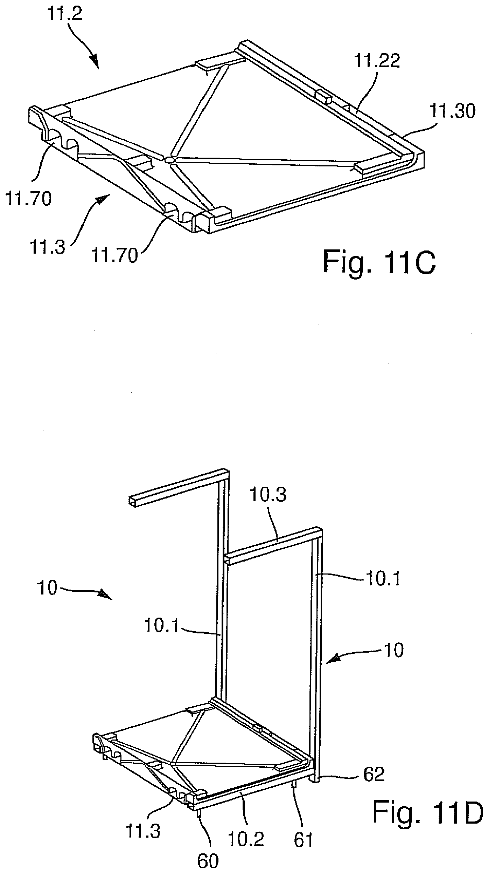

In einem weiteren Schritt (Fig. 11B), wird die Bodenplatte 11.3 als untere Abdeckung der Bodengruppe 11 mit einer den Vertikalprofilen 10.1 zuzukehrenden Rückseite 11.30 und dem Ablaufloch 11.21 bereitgestellt. Diese deckt die Unterseite der Leitplatte 11.2 mit den Formkanälen 11.20 ab, wie in dem weiteren Aufbauschritt nach Fig. 11C gezeigt ist. Anstelle der Bodenplatte 11.3 können die Formkanäle 11.20 jedoch auch separat durch eine oder mehrere Teilplatten abgedeckt und vorteilhaft auch abgedichtet werden. Wie Fig. 11C weiter zeigt, mündet der z. B. aus mehreren Teilkanälen gebildete Formkanal 11.20 auf der Rückseite der Leitplatte 11.2 in einer relativ breiten seitlichen spaltartigen Ausgangsöffnung 11.22, die nach oben geöffnet und auf der Rückseite mittels einer Abkantung der Bodenplatte 11.3 bzw. einer Teilplatte begrenzt ist. Eingezeichnet sind auch die Eingangsöffnungen 11.70 des Formkanals 11.20.

Die so vorbereitete Leitplatte 11.2 wird in einem weiteren Schritt gemäß Fig. 11D auf den unteren Horizontalprofilen 10.2 angeordnet und befestigt.

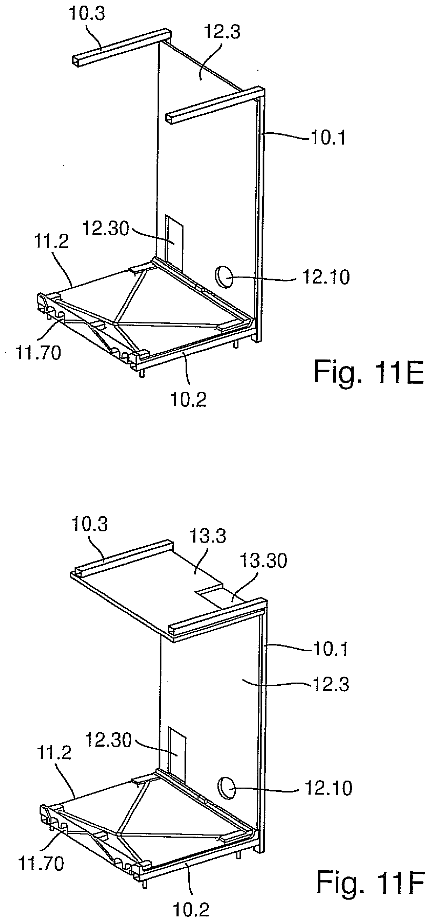

Sodann wird gemäß Fig. 11E die wärmeisolierende Außenverkleidung 12.3 auf der Vorderseite der Vertikalprofile 10.1 montiert. Im unteren Bereich ist die Außenverkleidung 12.3 mit einer durchgehenden Kompressoröffnung 12.30 zum späteren Einbau des Kompressors versehen, die neben der Ausgangsöffnung 11.22 der Leitplatte 11.2 angeordnet ist. Oberhalb der Ausgangsöffnung 11.22 ist eine untere Lüfteröffnung 12.10 in der Außenverkleidung 12.3 eingebracht, die jedoch auf der Rückseite der Außenverkleidung 12.3 z.B. mit einer dünnen Deckschicht der Außenverkleidung 12.3 oder einer separaten Platte abgedeckt ist und einen Kanal für die Luftströmung von der Ausgangsöffnung 11.22 zu dem später einzubauenden unteren Lüfter 57 bildet.

In einem weiteren Schritt wird die obere Abdeckung 13.3 an der Unterseite der oberen Horizontalprofile 10.3 montiert (Fig. 11F). Auf der Oberseite der oberen Abdeckung 13.3 ist bei dem gezeigten Ausführungsbeispiel hinten rechts die obere Kühlkomponentenaufnahme 13.30 ausgespart, wobei lediglich eine untere Abdeckschicht der wärmeisolierenden oberen Abdeckung 13.3 belassen ist.

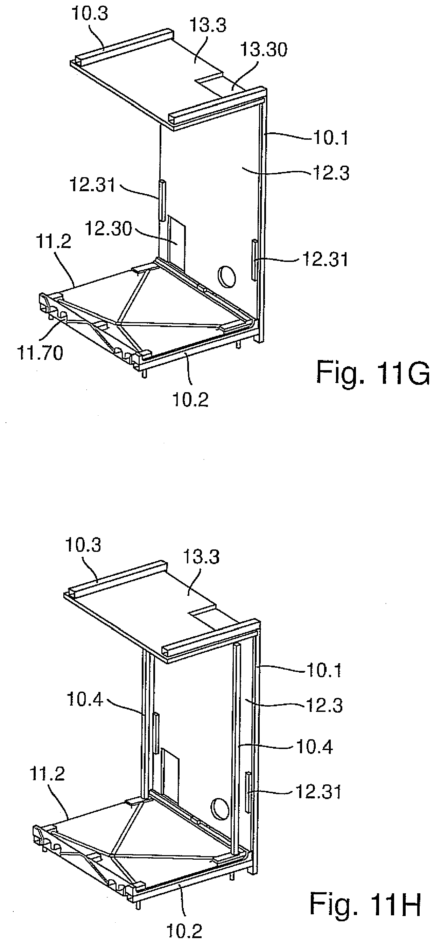

Bei dem in Fig. 11G gezeigten nächsten Schritt werden auf der Vorderseite der Außenverkleidung 12.3 in der Nähe der vertikalen Ränder Abstandshalter 12.31 befestigt.

Anschließend werden zwischen den oberen und unteren Horizontalprofilen 10.3, 10.2 in deren hinterem Bereich parallel beabstandet von der Vorderseite der Vertikalprofile 10.1 die Stützprofile 10.4 eingebaut, und zwar unter Verwendung der Stützplatten 10.40, 10.50 und der isolierenden Zwischenstücke zwischen der Unterseite der oberen Abdeckung 13.3 und der Oberseite der Leitplatte 11.2 (Fig. 11H).

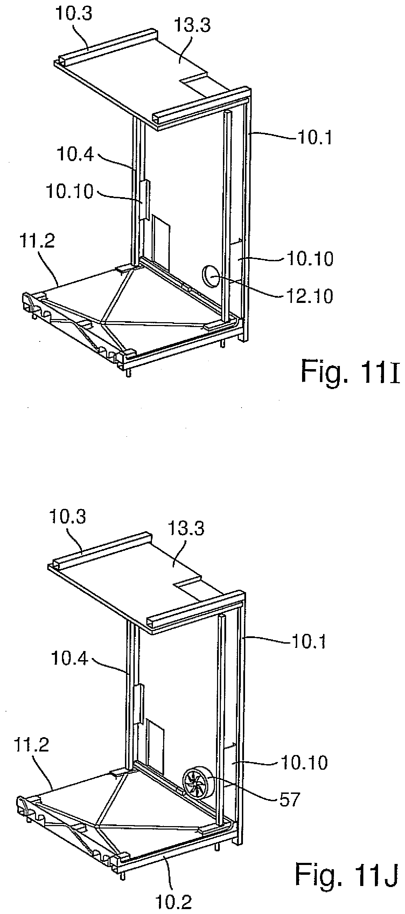

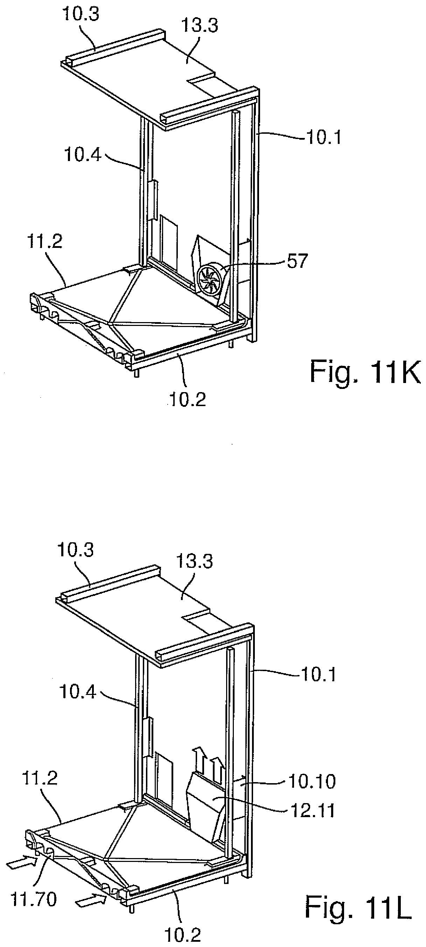

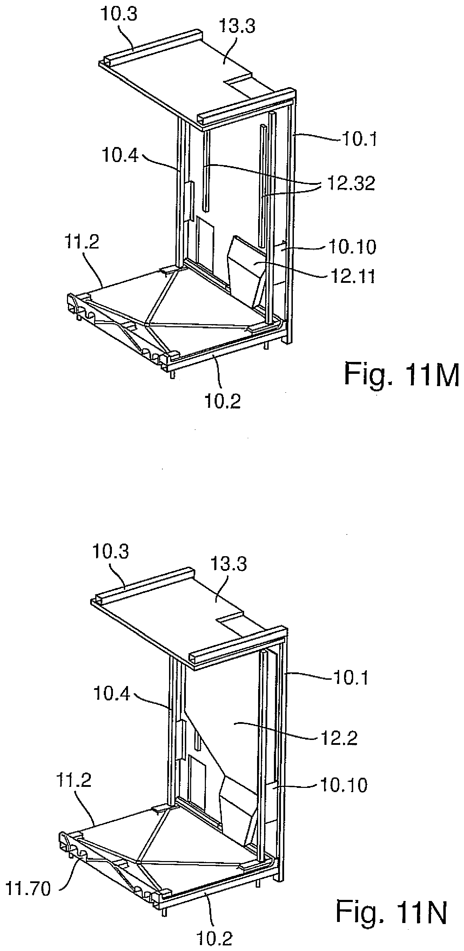

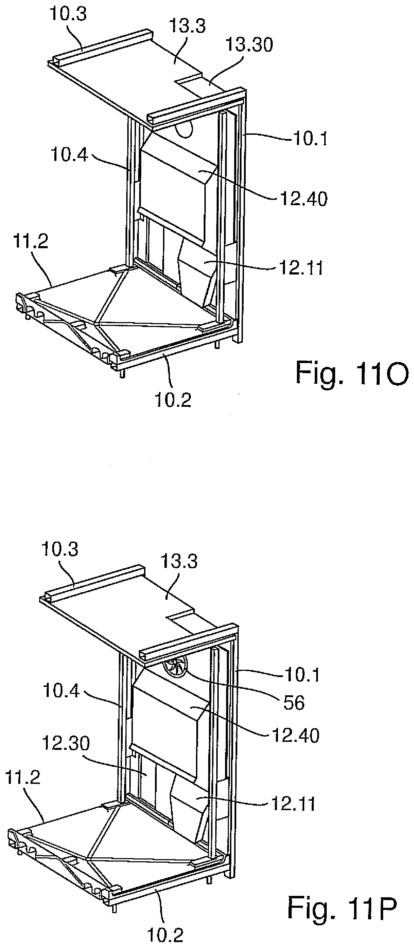

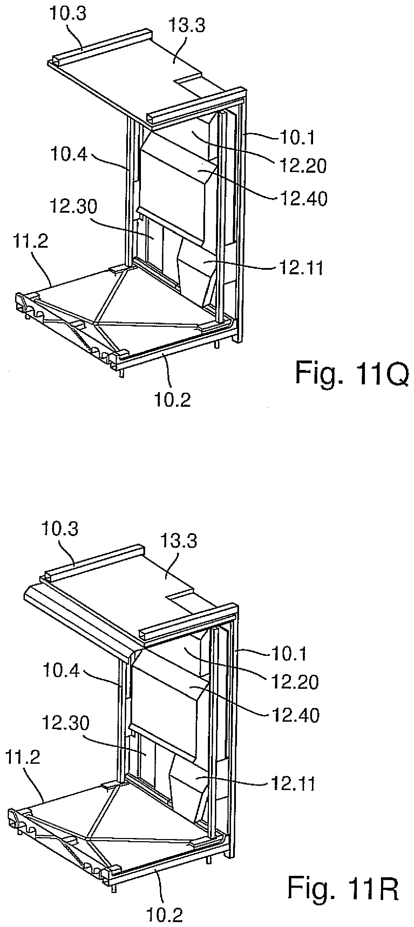

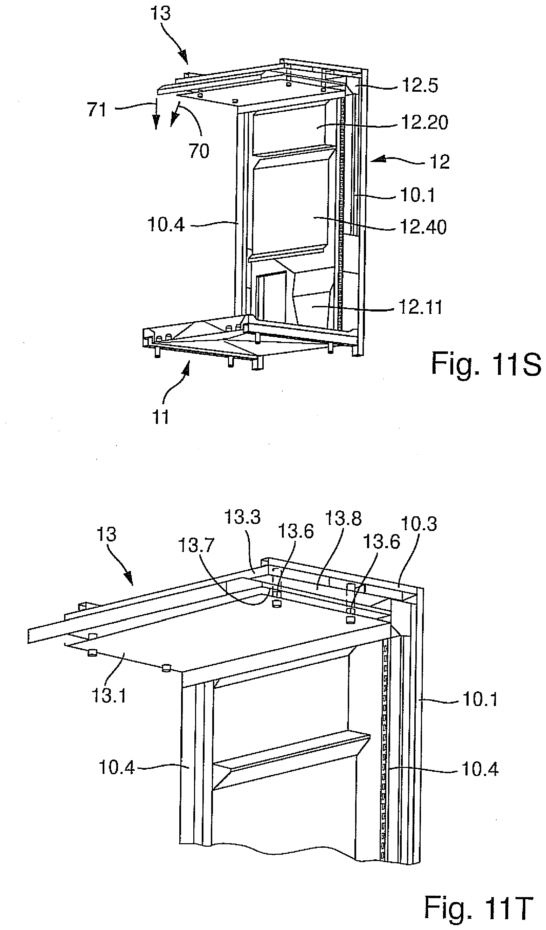

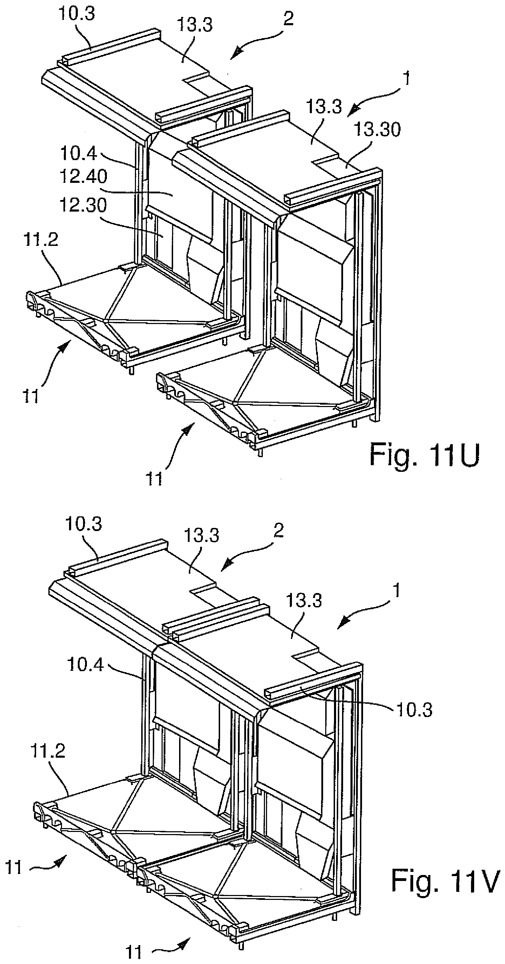

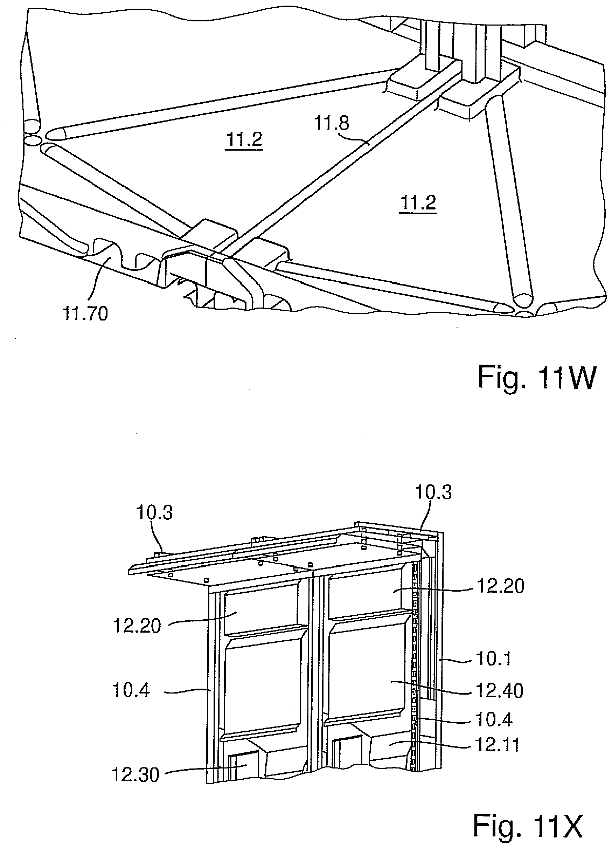

Im nächsten Verfahrensschritt (Fig. 11 I) werden zwischen den Stützprofilen 10.4 und den Vertikalprofilen 10.1, falls erforderlich, Fixierteile 10.10 zur Versteifung bzw. als Halteglieder befestigt, die auch weggelassen werden können, falls die Stützkraft ausreicht.

In einem darauffolgenden Schritt (Fig. 11J) wird der untere Lüfter 57 vor der unteren Lüfteröffnung 12.10 montiert und in weiteren Schritten mit einem Lüftergehäuse 12.11 umgeben (Fig. 11K, 11L), um den unteren Bereich des äußeren vertikalen Strömungskanals zu bilden.

In einem weiteren Schritt (Fig. 11M) werden auf der Vorderseite der Außenverkleidung 12.3 leistenartige vertikale Abstandsstücke 12.32 angebracht, auf denen unter Abstand zur Außenverkleidung 12.3 die Zwischenwand 12.2 zum Bilden des oberen Bereichs des vertikalen Strömungskanals angebracht wird, wobei eine Verbindung zur oberen Öffnung des Lüftergehäuses 12.11 hergestellt wird (Fig. 11N).

Auf der Zwischenwand 12.2 wird unter Abstand ein plattenartiges Kaltluftleitblech 12.40 montiert, hinter dem der Verdampfer 50, 50', 50" (nicht gezeigt) oder ein anderer Wärmetauscher angeordnet wird. Zudem wird auf einem von der Zwischenwand 12.2 beabstandeten Blech der obere Lüfter 56 montiert (Fig. 11O und 11P). Der obere Lüfter 56 oder stattdessen mehrere, z. B. zwei nebeneinander angeordnete obere Lüfter, wobei der untere Lüfter 57 auch weggelassen werden kann, wird bzw. werden von einer oberen Lüfterabdeckung 12.20 gehäuseartig abgedeckt, wobei von dem oberen Lüfter 56 aus dem Verdampfer 50, 50', 50" bzw. Wärmetauscher nach oben strömende Kaltluft beispielsweise axial eingesaugt und radial abgeführt wird, und zwar eine Teilströmung nach unten auf der dem Kühlraum 4 zugewandten Innenseite des Kaltluftleitblechs 12.40 und ein Teilstrom nach oben in den oben liegenden inneren Zwischenraum 13.7 der entsprechend ergänzten Dachgruppe 13 (Fig. 11Q und 11R). Die gehäuseartige obere Lüfterabdeckung 12.20 ist zur Luftführung in gewünschter Richtung und Stärke ausgebildet und kann auch mit einer Zwischenabtrennung zwischen zwei Lüftern 57 versehen sein, um eine gegenseitige Beeinflussung (z. B. Kurzschluss) zu vermeiden. Beispielsweise können in der Lüfterabdeckung 12.20 Ausströmöffnungen nach oben, nach unten und, falls erwünscht, auch nach vorn in abgestimmter Größe eingebracht sein.

Auch der äußere vertikale Strömungskanal 12.5 wird an den betreffenden äußeren oberen Strömungskanal 13.8 der Dachgruppe 13 angeschlossen, nachdem der äußere obere Strömungskanal 13.8 und der obere Zwischenraum 13.7 in der Dachgruppe 13 unter Verwendung der Tragezapfen 13.6 hergestellt sind (Fig. 11S und 11T). Hierbei werden auch die spaltartige Austrittsöffnung 13.50 und der Austrittsspalt 13.80 für den Kaltluftschleier 70 und den Warmluftschleier 71 im vorderen unteren Bereich der Dachgruppe 13 gebildet.

In weiteren Schritten wird z. B. aus zwei Regalmodulen 1, 2 eine Kühlregalanordnung aufgebaut, wie die Fig. 11U, 11V, 11W und 11X zeigen. Dabei werden die Seitenrahmen 10 an den Vertikalprofilen 10.1, den unteren Horizontalprofilen 10.2 und/oder den oberen Horizontalprofilen 10.3 unter Zwischenfügung von Distanzelementen, wie z. B. Distanzhülsen, in eindeutiger relativer Positionierung miteinander verspannt und entlang der einander zugewandten schmalen Ränder ihrer Außenverkleidungen 12.3, Leitplatten 11.2 und oberen Abdeckungen 13.3 unter Zwischenfügung von Dichtelementen, wie z. B. im Querschnitt pilzförmigen Dichtstreifen 11.8, abgedichtet.

## Patentansprüche

1. Kühlregal mit auf beiden Seiten angeordneten tragenden C-förmigen Seitenrahmen (10) aus Rahmenprofilen mit einem rückseitigen Vertikalprofil (10.1) und einem unteren und oberen nach vorne vorkragenden Horizontalprofil (10.2, 10.3), wobei an den Vertikalprofilen (10.1) eine Rückwandgruppe (12) mit wärmeisolierender Außenverkleidung (12.3) an den unteren Horizontalprofilen (10.2) eine Bodengruppe (11) und an den oberen Horizontalprofilen (10.3) eine Dachgruppe (13) angebracht sind, die einen Kühlraum (4) hinten, unten und oben umgeben, wobei zumindest die wärmeisolierende Außenverkleidung (12.3) der Rückwandgruppe (12) auf der dem Kühlraum (4) zugekehrten Innenseite der Vertikalprofile angebracht ist, **dadurch gekennzeichnet, dass** zwischen dem unteren und dem oberen Horizontalprofil (10.2, 10.3) im hinteren Bereich nach vorne von dem Vertikalprofil (10.1) beabstandet bei beiden Seitenrahmen (10) ein jeweiliges Stützprofil (10.4) eingebaut ist.

2. Kühlregal nach Anspruch 1,
**dadurch gekennzeichnet,**
**dass** die unteren Horizontalprofile (10.2) bodenseitig mit Füßen (60, 61) zum Abstützen auf dem Boden und Ausgleichen von Höhenunterschieden versehen ist.

3. Kühlregal nach Anspruch 1 oder 2,
**dadurch gekennzeichnet,**
**dass** das jeweilige aus Metall bestehende Stützprofil (10.4) gegenüber dem unteren und oberen Horizontalprofil (10.2, 10.3) ohne metallische Verbindung über wärmeisolierende Zwischenstücke (10.41, 10.51) abstützend eingebaut ist.

4. Kühlregal nach einem der vorhergehenden Ansprüche,
**dadurch gekennzeichnet,**
**dass** die Stützprofile (10.4) mit Lochreihen in vorgegebenem Rasterabstand versehen sind, an denen nach vorne in den Kühlraum (4) vorkragende Tragarme für Regalböden einhängbar sind.

5. Kühlregal nach einem der vorhergehenden Ansprüche mit einer in seitlicher Ansicht C-förmig aufgebauten Einheit mit der Bodengruppe (11), der Rückwandgruppe (12) und der Dachgruppe (13), die den Kühlraum (4) unten, hinten und oben begrenzen und zumindest zum Teil mit Komponenten einer Kühleinrichtung (5) versehen sind, wobei die Einheit auf beiden Seiten einen C-förmigen Seitenrahmen (10) aus Rahmenprofilen aufweist, wobei die Rückwandgruppe (12) auf ihrer Rückseite mit der wärmeisolierenden plattenförmigen Außenverkleidung (12.3) versehen ist, die entlang ihrer beiden vertikalen Längsrandbereiche mit den beiden Vertikalprofilen (10.1) verbunden ist, die Bodengruppe (11) eine mit den beiden unteren Horizontalprofilen (10.2) verbundene wärmeisolierende Leitplatte (11.2) aufweist und die Dachgruppe (13) eine mit beiden oberen Horizontalprofilen (10.3) verbundene wärmeisolierende plattenförmige obere Abdeckung (13.3) aufweist und wobei die Außenverkleidung (12.3), die Leitplatte (11.2) und die obere Abdeckung (13.3) jeweils auf der dem Kühlraum (4) zugewandten Innenseite der Rahmenprofile angeordnet sind.

6. Kühlregal nach Anspruch 5,
**dadurch gekennzeichnet,**
**dass** die Leitplatte (11.2) mit ihrem rückseitigen Rand an den unteren Rand der Außenverkleidung (12.3) unmittelbar oder mittelbar über Übergangsmittel angrenzt und die obere Abdeckung (13.3) mit ihrem rückseitigen Rand an den oberen Rand der Außenverkleidung (12.3) unmittelbar oder mittelbar über weitere Übergangsmittel angrenzt.

7. Kühlregal nach einem der vorhergehenden Ansprüche,
**dadurch gekennzeichnet,**
**dass** in einen Raum der Rückwandgruppe (12), der zwischen der Vorderseite der Außenverkleidung (12.3) und einer von der Vorderseite der Stützprofile (10.4) gebildeten Ebene liegt, ein Verdampfer (50, 50', 50") oder ein anderer Wärmetauscher zur Kühlung des Kühlraums (4) angeordnet ist und
**dass** der Verdampfer (50, 50', 50") oder andere Wärmetauscher mittels einer Tragvorrichtung auf der Vorderseite der Außenverkleidung (12.3) angebracht ist.

8. Kühlregal nach Anspruch 7,
**dadurch gekennzeichnet,**
**dass** in dem Raum der Rückwandgruppe (12) auch mindestens ein Lüfter (56) zum Erzeugen eines durch den Verdampfer (50, 50', 50") oder durch den anderen Wärmetauscher mit Kühlleistung beaufschlagten Kaltluftstroms angeordnet ist, der zumindest teilweise in den Kühlraum (4) geleitet ist.

9. Kühlregal nach einem der vorhergehenden Ansprüche,
**dadurch gekennzeichnet,**
**dass** die Rückwandgruppe (12), die Bodengruppe (11) und/oder die Dachgruppe (13) eine geschichtete Struktur mit mehreren voneinander beabstandeten plattenförmigen Wandelementen aufweist, wodurch mindestens ein Zwischenraum für eine Luftführung gebildet ist.

10. Kühlregal nach Anspruch 9,
**dadurch gekennzeichnet,**
**dass** die jeweiligen plattenförmigen Wandelemente zum Kühlraum hin auf der Außenverkleidung (12.3), auf der Oberseite der Leitplatte (11.2) und/oder auf der Unterseite der oberen Abdeckung (13.3) aufgebaut sind.

11. Kühlregal nach Anspruch 9 oder 10,
**dadurch gekennzeichnet,**
**dass** die plattenförmigen Wandelemente der Dachgruppe (13) mittels an der Unterseite der beiderseitigen oberen Horizontalprofile (10.3) befestigter wärmeisolierender Tragzapfen (13.6) angebracht sind.

12. Kühlregal nach einem der vorhergehenden Ansprüche,
**dadurch gekennzeichnet,**
**dass** in der Rückwandgruppe (12), der Dachgruppe (13) und der Bodengruppe (11) miteinander in Verbindung gebrachte kühlraumseitige innere Zwischenräume für eine Kaltluftströmung und miteinander in Verbindung gebrachte, vom Kühlraum (4) abliegende äußere Strömungskanäle für eine Warmluftströmung ausgebildet sind und
**dass** auf der Vorderseite des Kühlregals mittels der Kaltluftströmung ein Kaltluftschleier (70) und mittels der Warmluftströmung ein Warmluftschleier (71) gebildet sind, durch die umlaufende Luftströmungen erzeugt sind und eine Isolierung des Kühlraums (4) gegenüber der Umgebung bewirkt ist.

13. Verfahren zum Aufbau eines Kühlregals nach Anspruch 1,
**dadurch gekennzeichnet,**
**dass** zwei C-förmige Seitenrahmen (10) mit jeweils einem Vertikalprofil (10) und einem davon nach vorne vorkragenden unteren und oberen Horizontalprofil (10.2, 10.3) bereitgestellt werden,
**dass** auf den unteren Horizontalprofilen (10.2) eine aus wärmeisolierendem Material hergestellte Leitplatte (11.2) einer Bodengruppe (11), auf der Vorderseite der Vertikalprofile (10.1) eine wärmeisolierende Außenverkleidung (12.3) einer Rückwandgruppe (12) und auf der Unterseite der oberen Horizontalprofile (10.3) eine wärmeisolierende obere Abdeckung (13.3) einer Dachgruppe (13) montiert werden,
**dass** auf der Oberseite der Leitplatte (11.2), der Vorderseite der Außenverkleidung (12.3) und der Unterseite der oberen Abdeckung (13.3) mit Abstand plattenförmige Wandelemente für eine Luftführung aufgebaut werden, wobei zumindest in die Rückwandgruppe (12) Komponenten einer Kühleinrichtung (5) eingebaut werden, und
**dass** parallel beabstandet von der Vorderseite der Vertikalprofile (10.1) zwischen den hinteren Bereichen der unteren und der oberen Horizontalprofile (10.2, 10.3) Stützprofile (10.4) eingebaut werden.

14. Anordnung aus mehreren Kühlregalen nach einem der Ansprüche 1 bis 11,
**dadurch gekennzeichnet,**
**dass** mehrere nebeneinander gereihte Kühlregale (1, 2, 3) an ihren benachbarten Seitenrahmen (10) miteinander verbunden sind, wobei zwischen den Bodengruppen (11), den Rückwandgruppen (12) und den Dachgruppen (13) benachbarter Kühlregale (1, 2, 3) Dichtmittel eingebracht sind.

15. Anordnung nach Anspruch 14,
**dadurch gekennzeichnet,**
**dass** zwischen den miteinander verspannten benachbarten Seitenrahmen (10) Distanzelemente eingebracht sind und
**dass** die Dichtelemente zwischen einander zugekehrten schmalen Rändern der wärmeisolierenden Außenverkleidung (12.3), der wärmeisolierenden Leitplatten (11.2) und der wärmeisolierenden oberen Abdeckung (13.3) eingebracht sind.

## Claims

1. Refrigeration cabinet comprising supporting, C-shaped side frames (10) which are arranged on both sides and consist of frame profiles having a rear vertical profile (10.1) and a lower and an upper horizontal profile (10.2, 10.3) that project forwards, a rear wall group (12) having heat-insulating outer paneling (12.3) being attached to the vertical profiles (10.1), a bottom group (11) being attached to the lower horizontal profiles (10.2) and a top group (13) being attached to the upper horizontal profiles (10.3), which groups enclose a refrigeration space (4) at the rear, at the bottom and at the top, at least the heat-insulating outer paneling (12.3) of the rear wall group (12) being attached on the inner side of the vertical profiles, which side faces the refrigeration space (4), **characterized in that** a support profile (10.4) is installed in each of the two side frames (10), in the rear region and at a distance in front of the vertical profile (10.1), between the lower and the upper horizontal profile (10.2, 10.3).

2. Refrigeration cabinet according to claim 1, **characterized in that** the lower horizontal profiles (10.2) are provided with feet (60, 61) at the bottom for support on the floor and for compensating for height differences.

3. Refrigeration cabinet according to either claim 1 or claim 2, **characterized in that** the relevant support profile (10.4), made of metal, is installed in a supporting manner with respect to the lower and the upper horizontal profile (10.2, 10.3) by means of heat-insulating intermediate pieces (10.41, 10.51), without a metal connection.

4. Refrigeration cabinet according to any of the preceding claims, **characterized in that** the support profiles (10.4) are provided with rows of perforations at a predetermined grid spacing, on which perforations carrier arms, which project forwards into the refrigeration space (4), for shelves can be suspended.

5. Refrigeration cabinet according to any of the preceding claims, comprising a unit that is structured in a C-shape in side view and comprises the bottom group (11), the rear wall group (12) and the top group (13), which groups delimit the refrigeration space (4) at the bottom, at the rear and at the top and are provided, at least in part, with components of a refrigeration means (5), wherein the unit has, on both sides, a C-shaped side frame (10) consisting of frame profiles, wherein the rear wall group (12) is provided, on the rear side thereof, with the heat-insulating, planar outer paneling (12.3), which is connected, along the two vertical longitudinal edge regions thereof, to the two vertical profiles (10.1), the bottom group (11) has a heat-insulating guide plate (11.2) that is connected to the two lower horizontal profiles (10.2), and the top group (13) has a heat-insulating, planar upper cover (13.3) that is connected to the two upper horizontal profiles (10.3), and wherein the outer paneling (12.3), the guide plate (11.2) and the upper cover (13.3) are each arranged on the inner side of the frame profiles, which side faces the refrigeration space (4).

6. Refrigeration cabinet according to claim 5, **characterized in that** the guide plate (11.2) indirectly or directly adjoins, at its rear-side edge, the lower edge of the outer paneling (12.3) by means of transition means, and the upper cover (13.3) indirectly or directly adjoins, at its rear-side edge, the upper edge of the outer paneling (12.3) by means of further transition means.

7. Refrigeration cabinet according to any of the preceding claims, **characterized in that** an evaporator (50, 50', 50") or another heat exchanger for cooling the refrigeration space (4) is arranged in a space of the rear wall group (12), which space is located between the front side of the outer paneling (12.3) and a plane formed by the front side of the support profiles (10.4), and **in that** the evaporator (50, 50', 50") or other heat exchanger is attached to the front side of the outer paneling (12.3) by means of a support device.

8. Refrigeration cabinet according to claim 7, **characterized in that** at least one fan (56) is also arranged in the space of the rear wall group (12) in order to generate a cold airflow that is supplied with cooling power by the evaporator (50, 50', 50") or by the other heat exchanger and is guided into the refrigeration space (4), at least in part.

9. Refrigeration cabinet according to any of the preceding claims, **characterized in that** the rear wall group (12), the bottom group (11) and/or the top group (13) have a layered structure having a plurality of mutually spaced, planar wall elements, as a result of which at least one intermediate space for air circulation is formed.

10. Refrigeration cabinet according to claim 9, **characterized in that** the respective planar wall elements are built on the outer paneling (12.3), on the upper face of the guide plate (11.2) and/or on the lower face of the upper cover (13.3), towards the refrigeration space (4).

11. Refrigeration cabinet according to either claim 9 or claim 10, **characterized in that** the planar wall elements of the top group (13) are attached by means of heat-insulating support pins (13.6) fastened to the lower face of the two faces of the upper horizontal profiles (10.3).

12. Refrigeration cabinet according to any of the preceding claims, **characterized in that** inner intermediate spaces for a cold airflow, which are brought into contact with one another and are located on the refrigeration space side, and outer flow channels for a hot airflow, which are brought into contact with one another and are located away from the refrigeration space (4), are formed in the rear wall group (12), the top group (13) and the bottom group (11), and **in that**, on the front side of the refrigeration cabinet, a cold air curtain (70) is formed by means of the cold airflow and a hot air curtain (71) is formed by means of the hot airflow, as a result of which curtains circulating airflows are produced and the refrigeration space (4) is isolated with respect to its surroundings.

13. Method for constructing a refrigeration cabinet according to claim 1, **characterized in that** two C-shaped side frames (10) are each provided with a vertical profile (10) and a lower and an upper horizontal profile (10,2, 10.3) that project forwards therefrom, **in that** a guide plate (11.2), made of a heat-insulating material, of a bottom group (11) is mounted on the lower horizontal profiles (10.2), a heat-insulating outer paneling (12.3) of a rear wall group (12) is mounted on the front side of the vertical profile (10.1), and a heat-insulating upper cover (13.3) of a top group (13) is mounted on the lower face of the upper horizontal profiles (10.3), **in that** planar wall elements for air circulation are built on the upper face of the guide plate (11.2), the front side of the outer paneling (12.3) and the lower face of the upper cover (13.3) so as to be spaced therefrom, components of a refrigeration means (5) being installed at least in the rear wall group (12), and **in that** support profiles (10.4) are installed between the rear regions of the lower and upper horizontal profiles (10.2, 10.3) in parallel with, but at a distance from, the vertical profiles (10.1).

14. Arrangement of a plurality of refrigeration cabinets according to any of claims 1 to 11, **characterized in that** a plurality of refrigeration cabinets (1, 2, 3) lined up next to one another are interconnected at the adjacent side frames (10) thereof, sealing means being introduced between the bottom groups (11), the rear wall groups (12) and the top groups (13) of adjacent refrigeration cabinets (1, 2, 3).

15. Arrangement according to claim 14, **characterized in that** spacer elements are introduced between the adjacent side frames (10), which are braced against one another, and **in that** the sealing elements are introduced between mutually facing narrow edges of the heat-insulating outer paneling (12.3), the heat-insulating guide plates (11.2) and the heat-insulating upper cover (13.3).

## Revendications

1. Rayonnage frigorifique comprenant des cadres latéraux (10) porteurs en forme de C disposés des deux côtés et constitués de profilés de cadre comprenant un profilé vertical arrière (10.1) et des profilés horizontaux (10.2, 10.3) inférieur et supérieur faisant saillie vers l'avant, un groupe de paroi arrière (12) doté d'un revêtement extérieur thermo-isolant (12.3) étant monté sur les profilés verticaux (10.1), un groupe de base (11) étant monté sur les profilés horizontaux inférieurs (10.2), et un groupe supérieur (13) étant monté sur les profilés horizontaux supérieurs (10.3), lesquels groupent entourent un compartiment de réfrigération (4) par l'arrière, par le dessous et par le dessus,
au moins le revêtement extérieur thermo-isolant (12.3) du groupe de paroi arrière (12) étant appliqué sur le côté intérieur des profilés verticaux, tourné vers le compartiment de réfrigération (4), **caractérisé en ce**
**qu'**un profilé support (10.4) respectif est intégré entre le profilé horizontal inférieur et le profilé horizontal supérieur (10.2, 10.3) dans la région arrière de manière espacée du profilé vertical (10.1) vers l'avant sur les deux cadres latéraux (10).

2. Rayonnage frigorifique selon la revendication 1,
**caractérisé en ce que**
les profilés horizontaux inférieurs (10.2) sont pourvus, du côté du sol, de pieds (60, 61) servant à l'appui sur le sol et à la compensation de différences de hauteur.

3. Rayonnage frigorifique selon la revendication 1 ou 2,
**caractérisé en ce que**
le profilé support (10.4) respectif constitué de métal est intégré de manière porteuse par rapport aux profilés horizontaux inférieur et supérieur (10.2, 10.3) sans liaison métallique, par le biais de pièces intermédiaires (10.41, 10.51) thermo-isolantes.

4. Rayonnage frigorifique selon l'une des revendications précédentes,
**caractérisé en ce que**
les profilés support (10.4) sont pourvus de rangées de trous présentant un espacement de grille prédéfini, trous sur lesquels des bras porteurs, faisant saillie vers l'avant dans le compartiment de réfrigération (4), pour des fonds d'étagère peuvent être accrochés.

5. Rayonnage frigorifique selon l'une des revendications précédentes, comprenant une unité, réalisée en forme de C en vue latérale, comprenant le groupe de base (11), le groupe de paroi arrière (12) et le groupe supérieur (13), lesquels groupent délimitent le compartiment de réfrigération (4) par le bas, par l'arrière et par le dessus et sont pourvus au moins en partie de composants d'un dispositif de réfrigération (5), l'unité comprenant, des deux côtés, un cadre latéral (10) en forme de C constitué de profilés de cadre, le groupe de paroi arrière (12) étant pourvu, sur son côté arrière, du revêtement extérieur (12.3) thermo-isolant en forme de plaque, lequel revêtement extérieur est relié aux deux profilés verticaux (10.1) le long de ses deux régions de bord longitudinales verticales, le groupe de base (11) comprenant une plaque de guidage (11.2) thermo-isolante reliée aux deux profilés horizontaux inférieurs (10.2) et le groupe supérieur (13) comprenant un recouvrement supérieur (13.3) thermo-isolant en forme de plaque relié aux deux profilés horizontaux supérieurs (10.3), et le revêtement extérieur (12.3), la plaque de guidage (11.2) et le recouvrement supérieur (13.3) étant disposés respectivement sur le côté intérieur, tourné vers le compartiment de réfrigération (4), des profilés de cadre.

6. Rayonnage frigorifique selon la revendication 5,
**caractérisé en ce que**
la plaque de guidage (11.2) est adjacente, par son bord arrière, au bord inférieur du revêtement extérieur (12.3) directement ou indirectement par le biais de moyens de transition, et le recouvrement supérieur (13.3) est adjacent, par son bord arrière, au bord supérieur du revêtement extérieur (12.3) directement ou indirectement par le biais d'autres moyens de transition.

7. Rayonnage frigorifique selon l'une des revendications précédentes
**caractérisé en ce que**,
dans un espace du groupe de paroi arrière (12) qui se situe entre le côté avant du revêtement extérieur (12.3) et un plan formé par le côté avant des profilés support (10.4), est disposé un évaporateur (50, 50',50") ou un autre échangeur de chaleur servant au refroidissement du compartiment de réfrigération (4), et **en ce que** l'évaporateur (50, 50',50") ou l'autre échangeur de chaleur est monté, au moyen d'un dispositif de support, sur le côté avant du revêtement extérieur (12.3).

8. Rayonnage frigorifique selon la revendication 7,
**caractérisé en ce que**,
dans l'espace du groupe de paroi arrière (12), est disposé également au moins un ventilateur (56) servant à générer un flux d'air froid soumis à une puissance de refroidissement au moyen de l'évaporateur (50, 50', 50") ou au moyen de l'autre échangeur de chaleur, lequel flux d'air froid est guidé au moins partiellement dans le compartiment de réfrigération (4).

9. Rayonnage frigorifique selon l'une des revendications précédentes,
**caractérisé en ce que**
le groupe de paroi arrière (12), le groupe de base (11) et/ou le groupe supérieur (13) présentent une structure stratifiée comprenant plusieurs éléments de paroi en forme de plaques espacés les uns des autres, de telle sorte qu'au moins un espace intermédiaire pour un guidage de l'air soit formé.

10. Rayonnage frigorifique selon la revendication 9,
**caractérisé en ce que**
chaque élément de paroi en forme de plaque est monté sur le revêtement extérieur (12.3), sur le côté supérieur de la plaque de guidage (11.2) et/ou sur le côté inférieur du revêtement supérieur (13.3) en direction du compartiment de réfrigération.

11. Rayonnage frigorifique selon la revendication 9 ou 10,
**caractérisé en ce que**
les éléments de paroi en forme de plaques du groupe supérieur (13) sont montés au moyen de goupilles porteuses (13.6) thermo-isolantes fixées sur le côté inférieur des profilés horizontaux supérieurs (10.3) bilatéraux.

12. Rayonnage frigorifique selon l'une des revendications précédentes,
**caractérisé en ce que**,
dans le groupe de paroi arrière (12), le groupe supérieur (13) et le groupe de base (11), des espaces intermédiaires intérieurs côté compartiment de réfrigération mis en liaison sont réalisés pour un écoulement d'air froid et des conduits d'écoulement extérieurs éloignés du compartiment de réfrigération (4) et mis en liaison sont réalisés pour un écoulement d'air chaud et
**en ce que**, sur le côté avant du rayonnage frigorifique, un rideau d'air froid (70) est formé au moyen de l'écoulement d'air froid et un rideau d'air chaud (71) est formé au moyen de l'écoulement d'air chaud, rideaux d'air au moyen desquels des écoulements d'air périphériques sont générés et une isolation du compartiment de réfrigération (4) par rapport à l'environnement est produite.

13. Procédé permettant de réaliser un rayonnage frigorifique selon la revendication 1,
**caractérisé en ce que**
deux cadres latéraux (10) en forme de C comprenant respectivement un profilé vertical (10) et des profilés horizontaux (10.2, 10.3) inférieur et supérieur faisant saillie vers l'avant à partir de celui-ci sont fournis,
**en ce qu'**une plaque de guidage (11.2) d'un groupe de base (11), fabriquée à partir d'un matériau thermo-isolant, est montée sur les profilés horizontaux inférieurs (10.2), un revêtement extérieur (12.3) thermo-isolant d'un groupe de paroi arrière (12) est monté sur le côté avant des profilés verticaux (10.1) et un recouvrement supérieur (13.3) thermo-isolant d'un groupe supérieur (13) est monté sur le côté inférieur des profilés horizontaux supérieurs (10.3),
**en ce que** des éléments de paroi en forme de plaques sont montés à distance pour un guidage de l'air sur le côté supérieur de la plaque de guidage (11.2), sur le côté avant du revêtement extérieur (12.3) et sur le côté inférieur du recouvrement supérieur (13.3), des composants d'un dispositif de refroidissement (5) étant intégrés au moins dans le groupe de paroi arrière (12), et
**en ce que** des profilés support (10.4) sont intégrés de manière espacée parallèlement du côté avant des profilés verticaux (10.1) entre les régions arrière des profilés horizontaux (10.2, 10.3) inférieur et supérieur.

14. Ensemble constitué de plusieurs rayonnages frigorifiques selon l'une des revendications 1 à 11,
**caractérisé en ce que**
plusieurs rayonnages frigorifiques (1, 2, 3) disposés en rangées les uns à côté des autres sont reliés les uns aux autres au niveau de leurs cadres latéraux (10) adjacents, des moyens d'étanchéité étant insérés entre les groupes de base (11), les groupes de paroi arrière (12) et les groupes supérieurs (13) de rayonnages frigorifiques (1, 2, 3) adjacents.

15. Ensemble selon la revendication 14,
**caractérisé en ce que**
des éléments d'écartement sont insérés entre les cadres latéraux (10) adjacents serrés ensemble et
**en ce que** les éléments d'étanchéité sont insérés entre des bords étroits, tournés les uns vers les autres, du revêtement extérieur (12.3) thermo-isolant, des plaques de guidage (11.2) thermo-isolantes et du recouvrement supérieur (13.3) thermo-isolant.
